# EUROPEAN PATENT SPECIFICATION

(11) **EP 1 718 566 B1**
(45) Date of publication and mention of the grant of the patent: **23.05.2018**
(21) Application number: 05706237.4
(22) Date of filing: 14.02.2005
(51) Int. Cl.: C04B 111/23, C04B 111/28, B09B 3/00, C01B 33/12, C01B 33/14, C01B 33/18, C05F 11/00, C04B 18/10, C04B 28/02, C09K 17/12, B09C 1/08, C01B 33/141, C05D 9/00

(54) **PROCESS FOR PREPARING A SOLUBLE CRYSTALLINE BIOGENIC SILICA AND APPLICATIONS USING THE SAME**
VERFAHREN ZUR HERSTELLUNG EINES LÖSLICHEN BIOGENEN SILICIUMDIOXIDES UND DESSEN ANWENDUNGEN
PROCÉDÉ DE FABRICATION D'UNE SILICE BIOGENE SOLUBLE ET SES APPLICATIONS

(30) Priority: 13.02.2004 AU 2004900702
(43) Date of publication of application: 08.11.2006
(73) Proprietor: Nunn, Garry Robert, Gympie, QLD 4570 (AU)
(72) Inventor: Nunn, Garry Robert, Gympie, QLD 4570 (AU)
(74) Representative: Jones, Graham Henry
(86) International application number: PCT/AU2005/000188
(87) International publication number: WO 2005/077828

(56) References cited:
- EP-A1- 0 308 555
- EP-A2- 0 301 857
- EP-A2- 0 301 857
- EP-B1- 0 301 858
- EP-B1- 0 301 858
- WO-A1-01/74712
- WO-A1-01/74712
- WO-A1-95/10488
- WO-A1-95/10488
- DATABASE WPI Week 200414, Derwent Publications Ltd., London, GB; Class D15, AN 2004464132, XP008110334 & JP 2004 167374 A (KAWASAKI HEAVY IND LTD) 17 June 2004

## Description

### TECHNICAL FIELD OF THE INVENTION

THIS INVENTION relates to a process for preparing biogenic silica and applications thereof.

### BACKGROUND OF THE INVENTION

Activities in industrial and mining sites, power generating plants, waste management centres and the like invariably generate wastes that carry chemical contaminants The contaminants are unavoidably released into the environment and thereby polluting soil, sediments, sludges, water and/or air in the vicinity. As many of the contaminants are toxic, many attempts have been made to remove or encapsulate the contaminated media. Removal on its own is simply moving contaminated media and therefore would transfer pollution to another location and the toxic contaminants remain in the removed media. Encapsulation is costly and is not a long term solution as the contaminants in the encapsulated media will in time leach into the environment.

There is now increased awareness that the contaminated materials are potential hazardous to the environment and our food. For example, soils can be contaminated as a result of spills of hazardous materials and chemicals, through leakage from storage tanks or previous dumping of hazardous materials onto the ground and the use of non-biodegradable agricultural chemicals. In other examples, harbour dredging sediments and sludges, such as water treatment or sewerage purification sludges, may contain pollutants which may be inorganic such as heavy metals, and/or organic such as tars and like substances.

With treatments by encapsulation or immobilisation processes, the contaminated soil is mixed with an organic binder which is usually a cement based material. The soil and contaminants contained therein are in effect encapsulated by the cement. The resulting mixture would then be solidified and allowed to be hardened into a rock-like end product. The amount of cement rock binder that is usually necessary to obtain the hardened end product is 50% to 100% by weight of the contaminated soil. Often various additives must be added to the binder in order to increase the efficacy of the binder. The solidified material is usually disposed of in a landfill site, although occasionally it is used for construction fill.

Such encapsulation or immobilisation processes have been used since 1970s, on the belief that, once bound within the cement material, the contaminants could not leach out into the surrounding environment. This belief was based on test results from various procedures such as acid and water leaching of crushed and uncrushed samples of the hardened material. Recent studies have shown that this belief is incorrect, and that the toxic contaminants would leach out of the cement binder after a number of years. Accordingly, in addition to the inefficiency of having to transport the solidified soil or other material to a landfill site, it is now apparent that such a solidification process does not provide a long term solution to contaminated soils.

The applicant, realising that a large number of organic waste materials contain a high percentage of silica, has conducted experimentations for applications that can use the silica in organic materials. Unexpectedly, the applicant has found that the silica derived from these organic materials (biogenic silica) can be rendered soluble and would react with many of the contaminants in the polluted media. It is also surprising that the soluble biogenic silica has excellent flame retardation properties and is substantially pure. Clay soil treated with the soluble biogenic silica has some advantageous properties suitable for different applications.

EP 0 301 857 ENVIROGUARD INC is the nearest related art. Unlike the present invention which utilizes crystalline silica this patent describes the production of an amorphous silica by controlled burning of silica containing material as exemplified by rice hulls, rice stalks, horsetail weed, bagasse, etc. The amorphous silica is produced by burning in a furnace at temperatures ranging from 800 °C to about 1400 °C for a short time of about 3 mins so as to prevent crystallization. It is pointed out that various crystalline forms which arise at higher temperatures and longer burning times is to be avoided because the amorphous sate has an open skeletal structure because there has been insufficient time for migration to the crystalline form.

### OBJECT OF THE INVENTION

It is an object of the present invention to provide a soluble biogenic silica.

It is another object of the present invention to provide a method of treating materials contaminated with pollutants.

It Is a further object of the present invention to provide a method of remediating soil contaminated with pollutants.

It is a yet further object of the present invention to provide a method of treating materials contaminated with pollutants, in which the pollutants can be chemically altered into ecologically inert compounds, so that the treated material can pass appropriate regulatory standards.

It is yet another further object of the present Invention to provide a method of remediating contaminated soil wherein the treated soil has a soil-like or friable consistency, in which the treated soil can be left "in-situ", alleviating the need for disposal of the treated soil in a landfill or similar site.

A still further object of the present invention is to provide a method of treating clay soil using soluble biogenic silica.

### SUMMARY OF THE INVENTION

In a first aspect therefore the present invention resides In a process of preparing an aqueous crystalline biogenic silica comprising the steps of:
a) incinerating a silica bearing organic source at a temperature from about 700°C up to about 1200°C to produce crystalline incinerated silica bearing organic source and allowing the incinerated silica bearing organic source to cool;
b) adding the incinerated and cooled silica bearing organic source to an alkaline solution that has either been preheated to a temperature up to about 65°C or to be heated with the added incinerated and cooled silica bearing organic source to a temperature up to about 65°C, the alkaline solution being contained in a vessel and having a pH from 12 up to 14 the added incinerated and cooled silica bearing organic source constituting 2 to 22% by weight, and the alkaline solution constituting 3 to 8% by weight of an hydroxide or hydroxides and 70 to 95% by weight of water;
c) applying heat and pressure to the added incinerated and cooled silica bearing organic source and the alkaline solution in the vessel at a temperature between 100°C and up to about 300°C for 1 to 4 hours, to thereby form an aqueous crystalline biogenic silica with a pH from 12 to 14 and undissolved impurities derived from the added organic source; and
d) extracting the formed aqueous crystalline biogenic silica from the vessel.

In preference, the process of the present invention further comprises the step of:
c) solidifying the extracted aqueous biogenic silica to a solid form.

The silica bearing organic source may be selected from one or a combination of two or more of rice hulls, wheat hulls, and herbs with a high level of silica. Such herbs include urtica dioca (stinging nettle) and Equisetum (horsetail).

Typically, the silica bearing organic source is rice hull.

The hydroxides may be selected from those of sodium, lithium, potassium, rubidium, cesium and francium. In one example, the added silica bearing organic source is about 320g of incinerated rice hulls, and the alkaline solution is 160g of an hydroxide or hydroxides and 3 litre of water.

The vessel is preferably pressurised so that the heat is applied at a relatively high pressure therein. In one form, the vessel has an open top which is covered by a lockable lid with a pressure release valve arranged for releasing excessive pressure within the vessel.

The silica bearing organic source is preferably incinerated at a temperature up to 700°C to form a soluble amorphous silica and thereby the extracted aqueous biogenic silica is amorphous. The silica bearing organic source may also be incinerated at a temperature between 700°C to 1200°C to form a soluble crystalline silica and thereby the extracted aqueous biogenic silica is crystalline.

In a second aspect therefore the present invention resides in an aqueous amorphous biogenic silica produced according to the above described process.

In a third aspect therefore the present invention resides in an solid amorphous biogenic silica produced according to the above described process.

In a fourth aspect therefore the present invention resides in an aqueous crystalline biogenic silica produced according to the above described process.

In a fifth aspect therefore the present invention resides in a solid crystalline biogenic silica produced according to the above described process.

In a sixth aspect therefore the present invention resides in a method of remediating media containing inorganic and/or organic pollutants comprising contacting the media with a matrix generating agent having an aqueous or solid biogenic silica obtained according o the above mentioned process, the matrix generating agent being arranged to generate within the media a silicate matrix, the matrix having a plurality of active reactive sites for bonding to the pollutants.

It is preferred that the media is mixed with the matrix generating agent, and heating the resultant mixture at a temperature that is sufficiently high for a sufficient period to produce kerogenic compounds within said mixture.

Such kerogen-like or kerogenic structures are large organic geo-polymers of no particular order. Kerogenic compounds have an irregular structure, and comprises both aliphatic and aromatic constituents. Because of this structure, kerogens are capable of trapping within them smaller organic and inorganic molecules. The kerogenic compounds are formed by polycondensation reactions occurring at the reactive sites within the matrix, and the kerogens then become chemically bonded to the matrix. Kerogens are generally insoluble in both water and most organic solvents, and hence their formation is a highly effective method of remediating contaminated media.

The organic pollutants include P.C.B.s, polyaromatic hydrocarbons. pesticides, herbicides, insecticides, and related compounds, halogenated solvents, furans, volatile hydrocarbons such as benzene, toluene, xylene and other common organic contaminants. The media to be treated may also be contaminated with inorganic pollutants including heavy metals such as lead. cadmium, mercury, chromium, vanadium, and also radioactive elements such as uranium, strontium, thorium and other actinide, and substances containing radio active elements such as radioactive iodine.

Media such as soils, sediments, sludges, water, air and other similar materials which have been remediated with the method of the present invention generally meets regulatory standards, and is often classified as non-hazardous. Accordingly, the present invention provides a practical and economical method of treating contaminated media by utilising waste organic sources which are renewable resources.

The method of the present invention results in a chemical restructuring or reordering of the media being treated. As indicated previously, the method of the present invention (authigenically) generates a silica matrix with a colloidal structure. Such catalytically enriched silicate structures have a high number of reactive pores and channels, resulting in a matrix having a high porosity. The matrix has a plurality of catalytically active reactive sites adapted to render the pollutants into innocuous form. These sites are both physically and chemically active. Within the matrix, a variety of reaction mechanisms, including hydrogen bonding, coordination complexing, Lewis acid/base formation, covalent bonding, P.pi to D.pi bonding, are present. Such mechanisms break down the organic pollutants into environmentally benign forms. With material contaminated with organic pollutants, or mixed organic and inorganic pollutants, it is believed the reaction steps of the present invention are as follows. The free radical generators attack the organic contaminants to form organic free radical compounds. These organic free radicals then combine by a polymerisation-type reaction to create long chain compounds. These long chain compounds then combine, by condensation polymerisation, to form kerogen and/or kerogen-like compounds. Inorganic pollutants, such as heavy metals, are initially drawn into the generating matrix, and can subsequently be utilised as secondary catalytic materials, as further reactive sites. These inorganic pollutants are then mineralised, into a non-reactive, non-leachable state.

The aqueous and solid biogenic silica as obtained, liquid crystal matrix, are a highly reactive natural substance which means it bonds to many other reactive elements to form stable compounds as well as promoting chemically interactions with previously non-reactive elements, effectively lowering the threshold energy for many and varied beneficial reactions.

Catalytically enriched silicate structures bond to reactive free radical generators which are the unstable toxic pollutant atoms available in the soil/medium. The inter-molecular bonds that result are very strong and stable, making it unlikely for pollutants to move into food chain, and plant uptake. Therefor, cleaning up contaminated media such as soils for safe food production.

In a seventh aspect therefore the present invention relates to a construction material or fabric treated with the biogenic aqueous silica obtained as aforementioned. The treated construction material or fabric has a substantially good flame retardation property as well as termite deterrent property.

Silica in its common forms is generally insoluble. The aqueous and solid biogenic silica described in this process is obtained from any organic source, particularly in relation to species with a high proportion of silica present. In the raw material input form, the silica is totally insoluble. after the process described, a major proportion of silica has become aqueous. Silica in an aqueous form is extremely reactive, having many reactive bonding sites to which other reactive elements can attach. This chemical bonding has the capability to remove hazardous contaminants from the environment by changing the pollutants from a reactive state to a stable non-reactive state, thus solving many environmental contamination issues. These silica reactive sites occur both within the silica structure and externally, to connect a 3 dimensional interlocking matrix, greatly increasing elemental bonding efficacy. Catalyst in these external bonding mechanisms can be oxygen, hydrogen, hydroxides, the target elements or additive co-precipitants such as iron, fly ash, cement dust, chloride of cobalt, clay, calcium and aluminium. These catalysts enhance the inter and intra matrix bonding rate.

Presently, soluble silica is derived from mineral sources. Examples of the raw material feed stock to create soluble mineral based silica are kaolin clays, olivine, mica, sand and other mineral based forms. In these mineral forms there is a variety of other elements such as iron, manganese, magnesium, aluminium, sodium, calcium and titanium. Generally, silica as SiO₂, will be present at between 50 to 60% of total elements. However, the remaining portion of minerals are bonded to the silica reactive sites, thus reducing the ability to extract a high proportion of freely available soluble silica. Predominantly, it is aluminium, iron, magnesium and calcium which occupy these silica reactive sites. This renders mineral form of silica to be commercially unviable for chemical bonding applications.

By utilising organic forms of silica in the process according to the present invention, there is no or minimal blocking of reactive sites via reactive site occupation by aforementioned mineral compositions. By utilising incinerated organic resources such as rice or wheat hulls, the raw material feed stock for this process has a silica portion of about 92% as SiO₂, with other minerals totalling about 3%.

After completion, the process produces an aqueous silica which is almost totally reactive, with near 100% reactive sites, capable of bonding to the elements targeted for industrial/commercial applications. The reactive or bonding sites within the biogenic aqueous silica structure is vastly increased in comparison to presently available mineral forms. Furthermore, the inter intra molecular bonding which forms, via catalytic and co-precipitate bonding, rapidly forms in an exponential fashion, which causes this product to be very commercially attractive and environmentally desirable.

An analogy would be to liken the biogenic aqueous silica to block of residential flats. The mineral form of soluble silica has a high occupancy rate and thus has only a few vacancies for locking up elements. An organic form of aqueous silica, as described, has a high level of vacancies, allowing many elements to be locked up.

However, this analogy is inadequate in describing the matrix effect. Outside these buildings there are reactive sites also. The mineral flats have a low number of weakly attractive sites, disallowing the formation of stable interlocking matrices between buildings. Various elements are keys in forming these inter-building connections. The organic flats have a large number of strongly attractive sites, creating an exponential formation of stable inter and intra locking matrices between buildings.
Examples of use of the biogenic solid and aqueous silica are:
- Can be used in gas, liquid and solid phases
- Can be used to remove radioactive substances from solution into a precipitate which can be either disposed of or re-used.
- Change heavy metals from reactive to a non-reactive, unleachable state.
- The biogenic solid or aqueous silica can be added to waste streams at a ratio from 0.1 to 100 up to 1 to 1 ratio to change zinc, lead, cadmium, arsenic, chromium, cyanide, vanadium, manganese, mercury, gold, copper, nickel, iron etc. from a reactive to a stable non-reactive state. pH ranges from 0 to 14 are employed to maximise efficacy, depending on the waste stream components.
- Remove metals. sludges and water from waste oils, reducing the cost of reclaiming/processing to recyclers. The biogenic solid or aqueous silica is added at a rate of 1:100 up to 1:2 with waste oils in a vessel and agitated. The pH is previously adjusted according to individual waste streams, typically a pH of 2 to 4 is used, although a pH of 8 to 10 is also effective. Reaction time is usually complete within 10 minutes, although 24 hours may be required for settling time. At this stage, a layer of metal rich sludge forms, a layer of clean water and a film of oil results. The sludge is removed for disposal, the water is run to sewer and the oil fraction processed for re-use. This a huge cost savings for recyclers and has a cleaner waste stream for disposal.
- Biogenic solid or aqueous silica applied to wood renders the timber fire resistant. The thermal insulation properties in this solution make it a highly effective fire retardant to be used in paint manufacture and timber treatment.
- Can reclaim precious metals such as gold from ore bodies and solutions. This minimises environmental hazards and high energy consumption associated with mineral processing, while being very cost effective.
- This purest form of silica is essential for improvements in the semiconductor/computer component industries. This pure form of biogenic solid or aqueous silica is vital in its role in increasing processing speed and reducing size of silicon chips. This is especially relevant in the new era of nano technology. Existing forms of silica have mineral impurities which do not allow for above 5 volts of power to be applied as these mineral impurities, such a aluminium, leak and cause malfunction. With a pure form of silica a much higher voltage can be applied to cause faster processing speed and smaller wafers can be constructed. Existing "carbon-tubes" and "bucky balls" can be improved to at least 100 times capacity. This application to the new era of quantum dots is critical and has enormous ramifications.
- Applications in fertilisers to enhance plant cell strength and elasticity. This causes plant stems to become stronger, fruit and vegetable skins to be tougher, allowing for higher yielding plants to maintain yield loads without breaking, stems more resilient and increase shelf life of produce due to stronger skins. The reactiveness of biogenic solid or aqueous silica causes a more rapid formation of amino acids, poly peptites and proteins within the fertiliser and within the plant, performing as a catalyst to improve plant response. Applications of up to 10 ppm in the root zone is recommended. Beyond this, the biogenic solid or aqueous silica will lock-up nutrients and render them unavailable to the plant.
- Human ingestion or injection of biogenic solid or aqueous silica or of plants treated with biogenic solid or aqueous silica will remove radioactive substances from the body after nuclear medicine treatment, after radioactive contamination in warfare or nuclear accidents.
- Implications for human health from ingestion/injection of biogenic solid or aqueous silica include:
   - removal of heavy metals such as zinc and aluminium from brain surfaces, preventing onset of altzeimers disease
   - vital bone and teeth calcification
   - necessary for healing bones, tendons and ligament injuries
   - maintain normal bone structure in the elderly
   - prevents artherosclosis and disc degeneration in the back
   - prevents tooth decay
   - maintains skin elasticity
   - maintain hair and nail health

In an eighth aspect therefore the present invention resides in a method of clay soil comprising adding to a mass of clay soil an aqueous or solid biogenic silica obtained according o the above mentioned process in a proportion of between 0.2% to 2% weight to weight of the silica to the clay soil.

### BRIEF DESCRIPTION OF THE DRAWINGS

In order that the present invention can be readily understood and put into practical effect the description will hereinafter refer to the accompanying drawings which illustrate non limiting embodiments of the present invention and wherein:
Figure 1 is a schematic drawing showing a process of obtaining an aqueous biogenic silica according to the present invention;
Figure 2 shows the chemical structure of an amorphous aqueous biogenic silica obtained according to the process shown in Figure 1;
Figure 3 the chemical structure of a crystalline aqueous biogenic silica obtained according to the process shown in Figure 1;
Figure 4 to 9 show chemical structures of crystal line aqueous biogenic silica;
Figure 10 is a spectra diagram of SOLSIL and a sodium silicate sample in 100 - 1200 cm⁻¹ range;
Figure 11 is a FTR-IR spectra of H₂O, sodium silicate solution (sol) and four different preparations of SOLSIL;
Figure 12 shows two bar graphs representing fractions of the species in the aqueous phase after SOLSIL (1:10 dilution, pH12.8) treatment;
Figure 13 is a graph showing retention in the aqueous phase after SOLSIL treatment at pH12.8 vs. that at pH10.0;
Figure 14 shows specie desorption vs. moisture left during solid - aqueous phase separation; and
Figure 15 is a graph showing aqueous phase retention of Fe, Ra, U and Zn and a function of pH of aqueous phase measured after missing with SOLSIL .

### DETAILED DESCRIPTION OF THE DRAWINGS

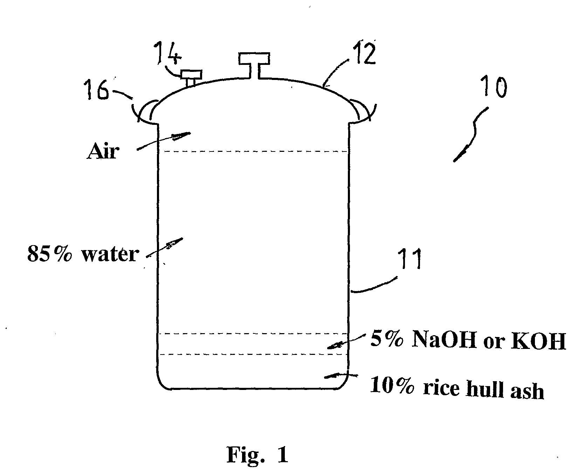

Referring to the drawings and initially to Figure 1, there is shown a vessel 10 having a body 11 with an open top and a removable lid 12 covering its open top. The lid 12 has a pressure release valve 14 for releasing pressure in the vessel 10 when the pressure therein is above a predetermined level. A locking arrangement 16 is provided to lock the lid 12 in place when the vessel 10 is being used.

In the process according to the present invention a caustic solution of pH up to 14 is poured into the vessel 10 and preheated to about 60°C. The caustic solution may comprise hydroxides of any one or more of sodium, lithium, potassium, rubidium, cesium or francium. In this embodiment, sodium hydroxide of pH14 is used. Incinerated rice hull ash is added to the hot caustic solution where it is heated in the closed vessel 10 to a temperature at boiling point for one to two hours. The temperature can be between 100°C and 300°C for a duration between 1 to 4 hours. In this embodiment, the caustic solution constitutes 5% by weight the incinerated rice hull ash 10% by weight and water 85% by weight. The ratio of ingredients can also be about 160g NaOH (or other hydroxides) to 320g rice hull ash to 3 litres of water.

This embodiment of the process results in 2% of undissolved slurry and 98% opaque liquid of aqueous biogenic silica at pH of about 13.5.

Two types of soluble silica can be created by this process. Amorphous forms of aqueous biogenic silica is formed by incinerating the rice hull ash at a temperature less than 700°C. The ideal form of amorphous rice hull ash has a carbon content between 2% and 8%. Crystalline forms of aqueous biogenic silica are formed the rice hulls are incinerated at a temperature between 700°C and 1000°C, typically known as crystobolite, which has no carbon present. At around 1200°C incineration the rice hull ash turns to glass and is ineffective to process for solubility.

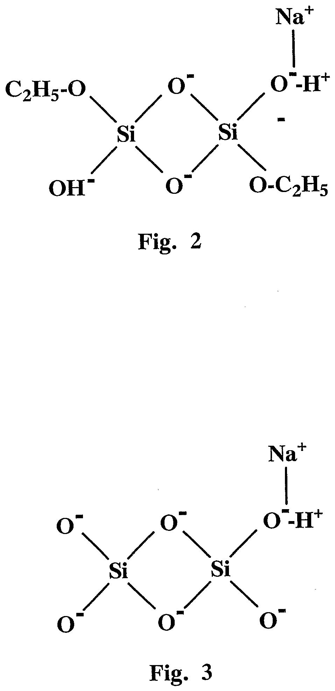

Amorphous aqueous biogenic silica obtained by the above process contains colloids of silica with a base structure of silicone dioxide in a long chain polymer with ethol C₂H₅ molecules, sodium, hydrogen and hydroxide occupying some of the external and internal bonding sites, as shown in Figure 2. Colloidal size of amorphous aqueous biogenic silica is between about 1 and 100 micron, mostly around the 10 micron range.

The crystalline rice hull ash when solubilised by this process, has different and in many cases, preferable characteristics than the amorphous form. The crystalline aqueous biogenic silica is also a colloid of silicon dioxide with no impurities such as ethol chains, the colloid being simpler and smaller in structure, as shown in Figure 3.

The crystalline aqueous biogenic silica has a colloid size of between 10 micron and 10 nanometer, with most colloids being around 1 micron in size. The smaller particle (colloid) size therefore has a larger surface area than the larger particle size of amorphous aqueous biogenic silica. This allows for more bonding sites available to chemically bond (absorb) to other elements (eg heavy metals). As the crystalline aqueous biogenic silica is almost pure, with no organic (ethol) molecules. it has more bonding sites available as lock-up mechanism also. Accordingly, crystalline forms compared to amorphous forms of aqueous biogenic silica are:
- purer, with no (very little) organic interference;
- smaller colloid size.

This results in a more effective chemical bonding agent which creates:
- more stable (stronger) bonding with other elements, less likely to leach back from solid to liquid phase;
- less volume of product needed to produce the desired result;
- broader pH range to be effective;
- higher temperature insulation properties, improved fire retardant characteristics.

Both the amorphous and crystalline forms of aqueous biogenic silica have no resemblance to sodium silicate, or water glass.

The applicant commissioned trials of the biogenic silica on a number of applications. The trial report confirms that biogenic silica obtained according to the process of the present invention are highly reactive with a number of substances. In this report, the biogenic silica is referred to as SOLSIL (i.e. trade name of the aqueous biogenic silica obtained by the process of the present invention).

For completeness, the report is included below:

### SOLSIL TRIALS

SOLSIL is being investigated to determine if it can be used reliably and cost effectively. Two forms were investigated, Attachment 1, a report from QUT outlines that we have two distinct products. The first being amorphous based *SOL A,* the second crystalline *SOL C*:
1. as a fixative for our toxic and heavy metal waste disposal
   - arsenic
   - chrome
   - cadmium
   - nickel
2. as an agent for our waste water treatment process
3. in other applications
   1. SOLSIL was initially found to be beneficial in the fixation process for arsenic. Arsenic is present in two principal forms - As₂O₅ and As₂O₃. Further investigation showed that As⁺⁵ had high selectivity to *SOL A* but initially As⁺³ had very little. Further trials showed pH and iron coprecipitate to be critical in binding the As⁺³ (Notel). Trials on a "real" waste sample of unknown ration of both forms did not perform favourably for TCLP trials. With recent findings results for "real" trials should improve.
      Trials with chrome waste also showed selectivity variations depending on the oxidation state of the chrome - either Cr⁺³ or Cr⁺⁶ and with SOLSIL forms. For the Cr⁺³ high affinity for *SOL C* between pH 2 and 6.5 was observed with subsequent leaching of gel with significant amounts of chrome with weak acid. *SOL A* had a tighter operating pH range in the alkaline region and showed less leachability. (Note 2). These results are encouraging for chrome waste in a liquid form.
      Using Cr⁺⁶ liquid waste significantly less affinity was shown with both forms of SOLSIL. Oxidation state was found to be critical. The +6 forms is not active with SOLSIL. Oxidation state can be changes with a reducing agent (i.e. Sodium meta bisulphate). TCLP trials with K₂Cr₂O₇ salt (Cr⁺⁶) and varying volumes of reducing agent produced results as low as 23ppm *SOL C* and 37ppm for *SOL A* from a starting concentration of 11,500ppm Cr. More work needs to be done in this area particularly with regard to fully converting Cr⁺⁶ to Cr⁺³.
      Liquid waste with high levels of nickel, cadmium and zinc waste treated 4:1 with *SOL C* the results are as follows. Ni from 4820 to 2590ppm, Cd 2350 to 164ppm and Zn 315 to 3.2ppm. Nickel results are the least encouraging with further investigation required to optimize conditions.
   2. Zinc trials comprised adding 1% and 0.1% of *SOL A* to the daily wastewater that is routinely run to monitor zinc levels. Typically it was seen that Zn levels of up to 2 ppm were easily removed simply by adding 1% *SOL A,* mixing and filtering. Using 0.1% SOLSIL brought the level down to 0.5 ppm or less. *SOL C* indicated that it was more effective (Note 3). To the standard inhouse wastewater treatment a 0.1 % *SOL A* was added to see if improvements could be seen and quantified. This upset the typical filter cake formation and had adverse effects on dissolved metals in the water going to sewer. (Table 1) Results from table 1 show that *SOL A* may be stripping off ions/etc from the piping and lining tanks. This is also indicated by the unexpected decrease in pH of the water before sewer. Attachment 2 is abstract from the University of Tennessee, Knoxville, TN - American Water Works Association Research Foundation that discusses the use of Sodium Silicate (a variant on SOLSIL, prices at over $70 a half litre.)
   3. SOLSIL demonstrates good fire-retarding properties. Wood chips, pate and polyurethane foam were soaked in both SOL A and SOL C and allowed to dry. A flame source directed to the materials resist catching alight significantly better than the untreated material. Further work is required to get SOLSIL in a form for industrial treatment.

Termite resistance has been trailed with some encouraging results. Department of Natural Resources are doing formal trials that should be available late February.

With regard to agricultural uses of SOLSIL related products, Tibor de jong was contacted and has expressed interest in organizing field trials.

SOLSIL by its nature and chemistry should be looked at in modifying properties of cement such as added strength and waterproofing.

**Note 1**: Waste type used was arsenic trioxide (97% pure). A solution of approx 1340 ppm was trailed and pH of 6.14 was found to be optimum for both forms of SOLSIL whereas the (SOL C) bound 100% of the arsenic with a lesser amount (6.8mg/L leached) using (SOL A). A ratio of 1 part SOLSIL to 4 parts arsenic solution.

Trials with Nopalmate, a high fluoride arsenate pesticide, on initial trials proves difficult to treat using the inhouse process whereas encouraging results have been obtained using (SOL C) form, reducing levels of 2500ppm As to about 25ppm.

**Note 2**: The original Cr⁺³ concentration was 14,600ppm with retentions of up to 99.9% with (SOL C) subsequent precipate leachings as low as 20 ppm. (SOL A) retained less initially but subsequently leached less, 2.8 ppm.

**Note 3**: For example a wastewater level of 9.9ppm Zn (by ICP) 0.1% (SOLA) brought the level down to 0.12ppm and 0.1% SOLC brought the level down to 0.07ppm Zn.

**Table 1:**

| **Element** | **After Press** | **Before Sewer** | **After Cement treatment** |
|---|---|---|---|
| | **pH approx 10** | **pH approx 6** | **pH approx 10** |
| Zn | 0.065 | 1.73 | 0.118 |
| Cd | 0.058 | 0.190 | 0.088 |
| Pb | 0.585 | 2.97 | - |
| Co | - | 0.009 | - |
| Ni | 0.057 | 0.310 | 0.495 |
| Mn | 0.087 | 1.48 | 0.006 |
| Fe | - | 111.0 | 1.33 |
| Cr | 0.003 | 0.169 | 0.054 |
| Cu | - | 0.323 | 0.213 |
| Al | - | 0.150 | 0.020 |
| As | - | - | - |

| | | | |
|---|---|---|---|
| Note: A(-) refers to no detectable level. | | | |

### ATTACHMENT 1

### Silicate ions in different SOLSIL preparations

### 1: INTRODUCTION

Four samples of SOLSIL preparations were examined for the nature of silica in the samples. The techniques used were ATR-IR and Raman spectroscopy. The silicate ion in the solution in the form of SiO₂(OH)₂²⁻ is recognised through bands located at 935 (υ₃), 777(υ₁), 607(υ₄) and 448(υ₂) cm⁻¹. The last two of these bands, υ₂ and υ₄, are reported as weak bands while the remaining two are given as medium intensity. The bands υ₁ and υ₃ correspond to stretching vibrations while υ₂ and υ₄ correspond to bending vibrations. While all four are Raman active, some of them may not be IR active. Additionally a band located around 1040 cm⁻¹ is assigned to polymerised silicate ions, rather than arising from the SiO₂(OH)₂²⁻ ion. The samples used include:
SOLSIL -
   Crystalloid preparation - #444
   Amorphous preparation pH14.0 - #167
   1:10 diluted amorphous preparation pH 12.8 - #167
   1:10 diluted preparation with pH adjusted to 10.0 - #166
Water glass
   For comparison - # sol

### 2: RESULTS

### 2.1: Raman Spectroscopy

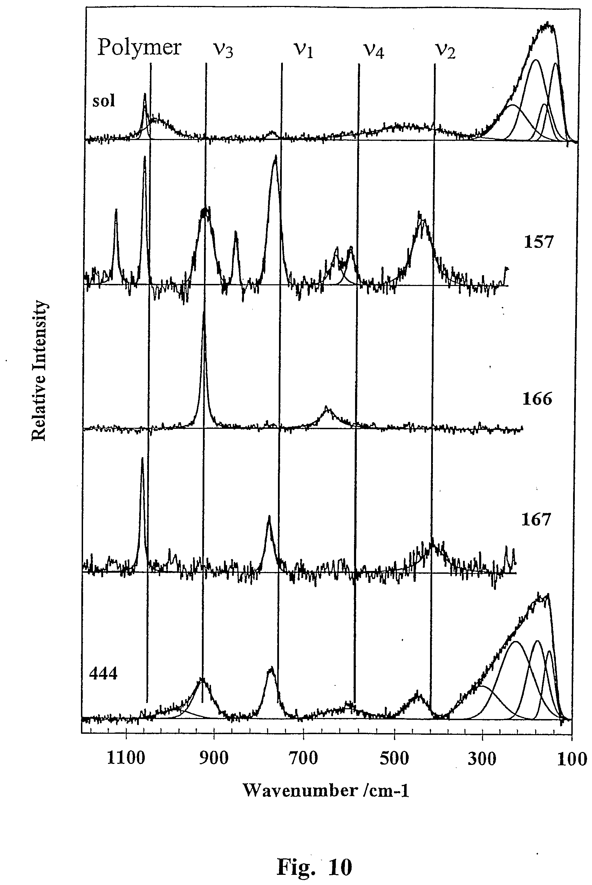

The results are summarised in Figure 10, where the relative signal intensity is plotted against the wavenumber.

Sodium silicate solution (water glass) shows a band at 1040 cm⁻¹, indicating the polymer nature of the silicate ions in the sample.

Sample 157, which is a preparation of amorphous SOLSIL also has a band in 1040 cm⁻¹ region, along with the bands at 925, 771, 601 and 444 cm⁻¹ which can be assigned to the four vibrational modes of the aqueous silicate ion. This spectra also contains many other bands indicating the presence of other chemicals in the solution.

Sample #167 is a 1:10 diluted version of the amorphous preparation. Broad similarities in #167 and #157 spectra are therefore not unexpected., In the spectrum of sample #167, a band at 778 cm⁻¹ may be assigned to the υ₁ and 420 to υ₂ vibration of the silicate ion. The spectrum suggest the presence of υ₃ and υ₄ bands as well, but the signal is small above the background. Compared to sample 157, the polymer band signal is higher than the silicate ion band signal in sample 167. This suggest that the dilution of amorphous SOLSIL preparation probably leads to further polymerisation. A possible explanation of this behaviour could be that as SOLSIL is diluted the pH decreases resulting in more silicate ions protonated and polymerised.

Sample 166 has a band at 927 cm⁻¹ and another near 660 cm⁻¹. Whereas the band at 927 cm⁻¹ may be attributed to the silicate vibration mode υ₃ the remainder three bands that can be assigned to the other vibrational modes of the silicate ion are missing. In this sample the silicate ion was perhaps mainly lost from the solution as dilution occurred and pH was adjusted to 10.0 using acetic acid. This conclusion is supported by a visual observation of SOLSIL stocks when stored at such pH over prolonged periods - a white residue may appear at the base of the container.

Sample 444, a sample of Crystalloid preparation of SOLSIL, shows a refined presence of SiO₂(OH)₂²⁻ ions. The four bands are located around 926, 772, 609 and 451 cm⁻¹. They all correspond to the expected vibration bands of SiO₂(OH)₂²⁻. Also, as an expected behaviour, the bands υ₁ and υ₃ are relatively stronger than υ₂ and υ₄. The 1040 cm⁻¹ band is minimal, indicating little polymerisation of silicate in the sample. The absence of any other major bands indicates a high level of purity.

### 2.2: ATR-IR Spectroscopy attenuated total reflection

Theoretically some of the silicate ion vibrations may not be IR active; this and the high IR absorbance of water makes ATR-IR (Attenuated total reflection infra red) spectra of limited use in identifying the presence of silicate.

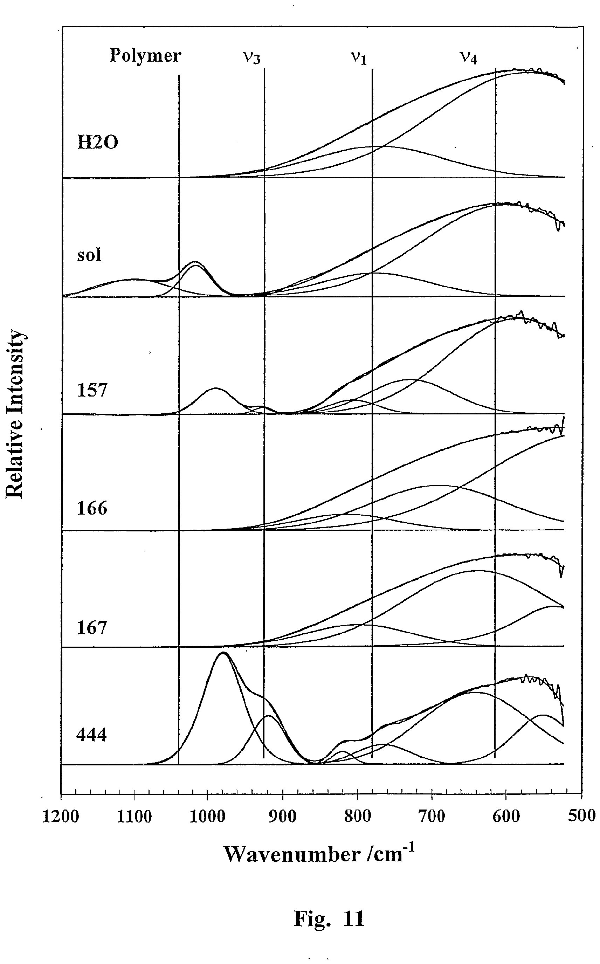

The results in Figure 11 are the spectra for all four SOLSIL samples and the sodium silicate solution. A spectrum for water has been added for comparison. Those portions of the spectra where the signal is likely to be broadened under the influence of more than one peak, are deconvoluted using Fourier transformations and individual components are plotted underneath the integrated signal.

Despite its difficulty of interpretation the IR spectra enable some grouping of the material. Below 900 cm⁻¹, the spectra are dominated by the IR absorbance of water and any meaning ful deconvolution is not possible. The deconvolution signal shows the presence of a band around 920 cm⁻¹ for both samples #157 and #444. These samples are undiluted amorphous and crystalloid preparations of SOLSIL and the band may correspond to the υ₃ vibration that may correspond the υ₃ vibration.

An additional peak appears around 980 cm⁻¹. This peak is strongest in sample #444 but also distinctly visible in #157 and #sol. This peak should somehow relate to the presence of silicate material, but no interpretation can be offered at this stage. Another peak at 1100 cm⁻¹ is seen only in the sodium silicate solution (#sol).

### 3: IMPLICATIONS

It was found that the silica was present in the solution as a colloid. It is presumed that the colloid was prepared by the hydrolysis of TEOS (tetraethoxysilane). The colloid was stabilised through the adsorption of cations such as K⁺, Na⁺, Cs⁺ or similar cations. Anions would also be suitable for the stabilisation of the colloid. Optical spectroscopy enabled the colloid to be seen through light scattering techniques. Upon precipitation of the colloid through evaporation of the solvent, the material remained on the colloidal scale. Both the solid and colloidal solution were analysed using vibrational spectroscopic techniques. A comparison was made with a solution of sodium silicate. No spectroscopic comparison could be made between the solution of the sodium silicate and the water glass. Spectroscopy shows the presence of other chemicals in th4e colloidal solution. These chemicals are probably a by-product of the hydrolysis of TEOS.

It is envisaged that the mechanism for the adsorption of heavy metals is by replacement of the adsorbed group 1 alkali cation. This replacement causes the destabilisation of the colloid resulting in its precipitation. This adsorption of heavy metals and subsequent precipitation provides a method for the removal of heavy metals from solution.

### ATTACHMENT 2

### Iron and Manganese Removal

### Title: Sequestering Methods of Iron and Manganese Treatment

Abstract: This report summarized research performed at the University of Tennessee on the sequestering of iron and manganese by sodium silicate and polyphosphate. Iron and manganese are common in groundwater supplies and can lead to objectionable color and turbidity in drinking water as well as staining of laundry and fixtures. An alternative treatment technique to removal of iron and manganese by oxidation and filtration is sequestration of iron and manganese. Here sequestration means preventing the formation of objectionable color and turbidity without actually removing the iron or manganese. Sodium silicates and polyphosphates have typically been added as sequestrants. This an other research shows that sequestering of iron by the nearly simultaneous addition of sodium silicate and chlorine is successful at many sites. There are a multitude of operational and water quality variables affecting the success of this sequestration method however. Costs for using chlorine and silicate are given. The role of pH is still uncertain, giving conflicting results in some studies. While sequestering by sodium silicate and chlorine was field tested, sequestering by polyphosphates was studied in laboratory test. Polyphosphates have better prospects than do silicates for sequestering significant concentrations of manganese. Polyphosphates also sequester iron. Orthophosphate performed nearly as well as some of the polyphosphates in terms of color and turbidity, but gave lower iron filterability. It was found that streaming current could be correlated with treatment effectiveness in laboratory waters.

### ANNEX B

### Batch experiments to test SOLSIL's capability to remove selected soluble chemical species to a self-generated solid phase.

### 1: Introduction

*SOLSIL*, provided to QUT by Mr. Garry Nunn of 150 Fisher Road, Gympie Q4570, most likely contains a soluble form of silica maintained at a pH of about 14.

Initial test tube investigations showed that when mixed with certain chemical species, *SOLSIL* generated a solid phase that with time settled. The aqueous phase left above then was likely to contain a lower concentration of the chemical specie involved. These investigations were conducted with salts such as MnCl₂, FeCl₃, Cd(NO₃)₂, Pb(NO₃)₂, HgCl₂, AgNO₃ and solutions of thorium and uranium nitrates.

Inspired by the results of initial investigations and considering a potential need of materials for applications in industrial waste management, a systematic study was designed to test *SOLSIL's* capability to remove selected soluble chemical species from the aqueous phase to a self-generated solid phase.

This study was designed such that its outcome should assist in making a decision about further development of *SOLSIL* as a product for use for a broad range of applications. It was not aimed at finding out suitable optimum working conditions for *SOLSIL* to remove individual species from specific waste materials.

The chemical species tested included radioactive and stable isotopes of a number of different elements likely to be present in various waste streams and waste handling facilities. The study was limited to two diluted preparations of *SOLSIL.*

### 2: Species investigated

Investigations covered a selection of stable and radioactive sp3ecies, considering examples from waste streams, species likely to be present in nuclear water storage facilities or those associated with mining and milling of radioactive ores. Besides, results for some radioactive isotopes may be used as an indicator of the expected behaviour of their stable counterparts. In most cases a range of concentrations was used. Stock solutions were prepared from original source materials through dilution suing deionised water (Table One). They were kept in acid washed volumetric flasks. In a number of cases, the stock solutions were acidified to ensure retention of the species in solution form.

In addition to the abundant ²³²Th, the aged thorium nitrate solution used in this study also contained ²²⁸Ra and ²²⁸Th. Analytical techniques permitted an independent analysis of Th and Ra behaviour using these isotopes.

**Table one: Species and their concentrations investigated in this study. The source shows the origin of the material used to prepare the stock solutions.**

| **Specie** | **Concentration** | **Source** | |
|---|---|---|---|
| **Stable** | **(g.L⁻¹**) | | |
| 1 | Zn⁺⁺ | 0.1, 1.0, 10.0, 100.0 | Zncl₂ Unilab |
| 2 | Fe⁺⁺⁺ | 0.1, 1.0, 10, 100 | FeCl³.6H²O Unilab |
| 3 | Pb⁺⁺ | 0.05, 0.5 | Pb(NO₃)₂ Mallinckrodt |
| 4 | Cd⁺⁺ | 0.1, 1.0, 10 | CdCl₂ M & B |
| 5 | Cr³⁺ | 0.1, 1.0, 10, 100 | Sigma AA Standard 292044 |
| 6 | Ni⁺⁺ | 0.1, 1, 10 | NiCl₂.6H₂O Chem-Supply |
| 7 | Cu⁺⁺ | 0.1, 1.0, 10 | CuCl₂.2H₂O Unilab |
| 8 | As⁺⁺⁺ | 0.01, 0.1 | Sigma AA Standard 206962 |
| 9 | Hg⁺⁺ | 0.01, 0.1 | Sigma AA Standard 207292 |

| | **Radioactive** | **(Bq*.L⁻¹)** | |
|---|---|---|---|
| 10 | Uranium | 100, 1000 | Uranyl Nitrate Unilab L/R |
| 11 | ²²⁹Ra | 100, 1000 | Amersham Standard RAY.44 |
| 12 | Thorium | 100, 1000 | Old Thorium Nitrate |
| 13 | ²¹⁰Pb | 1500 | Mixed radionuclide standard FX787 Amersham |
| 14 | ⁶⁰Co | 100, 1000 | QUT working standard |
| 15 | ¹³⁷Cs | 500 | QUT working standard |
| 16 | ⁹⁰Sr - ⁹⁰Y | 500 | Certified standard Amersham |
| 17 | ²⁴¹Am | 500 | Certified standard Amersham |

| | | | |
|---|---|---|---|
| *Bq (Becquerel) is a unit of radioactivity - corresponds to one nuclear disintegration per second. | | | |

### 3: SOLSIL

Preliminary test tube studies demonstrated its function at a higher pH with concentrated solutions. As another extreme boundary situation we found that a 1:200 dilution of *SOLSIL* would not lead to formation of a solid phase when mixed with a number of those materials where the *SOLSIL* as provided did. Also, if pH was adjusted to 7 or below, a solid formation appeared in the *SOLSIL* either immediately after adjustment or a few days later in storage. Most experiments in this study were conducted at intermediate values between these two extremes. The provided *SOLSIL* was diluted 10 times by mass. Two preparations were used, one at the unadjusted pH of 12.8 and the other at the adjusted pH of 10.0 - glacial acetic acid was used to adjust pH.

Another reason for testing *SOLSIL* in a diluted and pH adjusted form was out thought that in certain applied situations higher dilutions and a closer to neutral pH may be desirable feature for material handling.

### 4: Experimental details

In brief, the batch test involved mixing of the *SOLSIL* preparation with a sample of the stock solution and allowing for interactions to take place over a period of several hours - up to 2 days. This was followed by steps to separate the solid and aqueous phases generated during the mixing and the subsequent analysis of the separated aqueous phase using an appropriate analytical technique. Batch desorption experiments were conducted to estimate any movement of the specie back from the solid to the aqueous phase.

In detail, equal masses (about 20g each for radionuclides and 40g each of chemical species) of 1:10 diluted *SOLSIL* preparation and the stock solution of selected species were taken in washed, acid soaked and pre weighed 120mL plastic containers. The lids were sealed and the interaction was allowed through slow mixing by rotation at 2rpm for several hours.

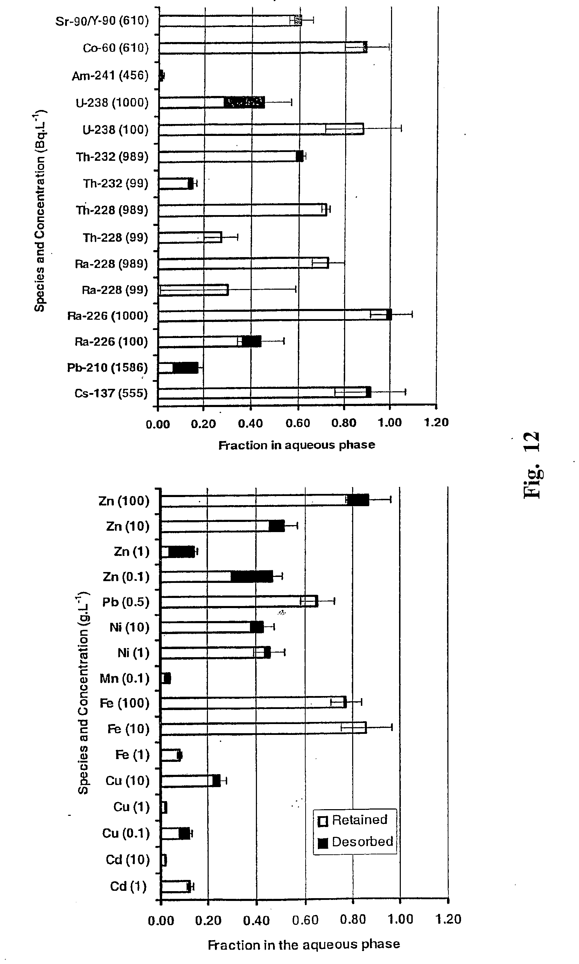

The mixture was allowed to settle for at least 12 hours (Figure 12). To permit adequate separation of the aqueous and solid phases generated during the interaction, the containers were then centrifuged at 5000 rpm for 10 minutes.

The aqueous phase was removed in a separate (washed, acid soaked and pre-weighed) container, weighed and sub-samples were taken for analysis. The solid-phase was weighed, dried and re-weighed.

The tests were carried out in replicates.

To test the stability of removal process, impregnated dried solid material from the above mentioned experiments was mixed with deionised water - without *SOLSIL* and specie spike. Remixing then proceeded; followed by separation of the two phases, similar to the original experiments. The aqueous phase was analysed to estimate specie desorption.

Analysis of radioactive species was conducted using a variety of techniques at the QUT Radiological Laboratories (Table 2). The instruments were calibrated using certified standards. Chemical analysis of stable species was carried out using an ICP-facility at SIMTARS. Appropriate dilutions were prepared to meet the operational range of the ICP system. Occasionally, additional dilutions were required to overcome the interference of Si thatwas most likely introduced by the *SOLSIL.*

All experiments were conducted using recommended approved safe facilities and appropriate personal protection equipment.

Safety considerations (vigorous exo-thermic reaction) prevented us from including CR⁺⁶ as in chromic acid (CrO₃ or H₂CrO₄) in the list of species of this preliminary study.

### 5: Observations

The ratio between the amount of specie in the final *(SOLSIL* treated) aqueous phase and the original solution is an indicator of the ability of *SOLSIL* to remove it from the aqueous to a self generated solid phase. In this report all batch experiment results are presented as this ration - the retention in the aqueous phase. A value close to zero of this parameter indicates a complete removal; that close to unit, inability to remove. To allow a direct comparison, desorption is also resented as the fraction of the original amount that moved back to the aqueous phase.

In Appendix One, results of the batch experiments are presented in a tabular form. Where more than one valid results were available for a given specie and concentration, they have been averaged to improve the statistical validity of the result. Appendix Two is an extended compilation of analysis and results. Appendix Three and Four contain the raw data of radionuclide and stable species analyses, respectively. Appendix Two, Three and Four are provided on a compact disc (not included).

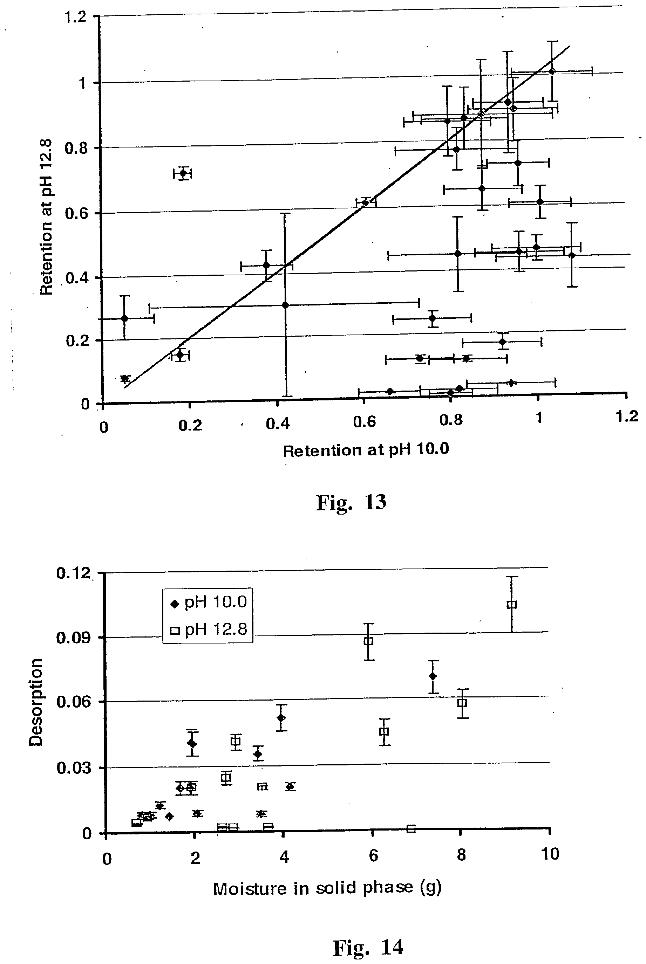

Ten times diluted *SOLSIL* at unadjusted pH12.8 generated solid phases during interaction with most species investigated. In most cases, the aqueous phase remaining after *SOLSIL* treatment exhibited statistically lower specie amount than that prior to the treatment (Figure 3). Diluted *SOLSIL* at adjusted pH10.0 was relatively less effective - removal still occurred but it was generally less than that for treatment at pH 12.8. This can be visualised through Figure 13 where aqueous phase retention data for a number of species at pH12.8 are plotted against the corresponding values obtained for pH 10.0. The values mainly lie on the bottom right had side of the graph - confirming relatively higher retention (or less removal) at the lower pH.

Once removed to the solid phase the specie was mainly retained by the solid phase. Desorption values range between 17% (U, 100 Bq) to almost zero (a number of species) with an average of 4% at standard deviation of 5%. The dried solids used for the desorption experiments contained a solute residue of the original specie. This is because complete removal of the aqueous phase was impractical and, even after centrifuging, some moisture was left in the solids. This might represent a situation closer to a practical application but, during a desorption test the solute residue left in the solid phase had a potential to simply wash back into the aqueous phase again. In Figure 14, increasing amount of moisture left in the solid during separation of the two phases. This suggests that the backwash perhaps did make a significant contribution and desorption results should be taken as a conservative estimate of any remobilisation of the material from the solid phase.

The aqueous phase results in this report include a small mass balance correction based on the wet/dry mass ratios of the solid phase and, within the uncertainties, they should be adequate.

**TABLE A2: Analytical results for batch experiments with stable species**

| **a) SOLSIL 1:10 dilution pH 10.0** | | | | | | | | | |
|---|---|---|---|---|---|---|---|---|---|
| Speci e | Conc (g.L⁻¹) | Specie retention in aqueous phase | | | Specie desorption | | | pH of aqueous phase after mixing | Dry mass of solid phase (g) |
| Cd⁺⁺ | 1 | 0.71 | ± | 0.08 | 0.02 | ± | 0.0 0 | 5 | 0.07 |
| | 10 | 0.59 | ± | 0.0 7 | 0.07 | ± | 0.0 1 | 7 | 1.23 |
| Cu⁺⁺ | 0.1 | 0.84 | ± | 0.0 9 | | | | 4 | 0.06 |
| | 1 | 0.82 | ± | 0.0 9 | | | | 5 | 0.37 |
| | 10 | 0.75 | ± | 0.0 9 | 0.01 | ± | 0.0 0 | 5 | 0.18 |
| Fe⁺⁺ | 1 | 0.04 | ± | 0.0 0 | 0.01 | ± | 0.0 0 | 4 | 2.26 |
| | 10 | 0.80 | ± | 0.1 0 | | | | 0 | 0.04 |
| | 100 | 0.81 | ± | 0.1 4 | 0.01 | ± | 0.0 0 | 0 | 0.36 |
| Mn⁺⁺ | 0.1 | 0.92 | ± | 0.1 0 | 0.02 | ± | 0.0 0 | 4 | 1.01 |
| Ni⁺⁺ | 1 | 0.91 | ± | 0.1 0 | 0.05 | ± | 0.0 1 | 5 | 0.17 |
| | 10 | 0.38 | ± | 0.0 6 | | | | 4 | 0.85 |
| Pb⁺⁺ | 0.5 | 0.87 | ± | 0.0 9 | 0.01 | ± | 0.0 0 | 4 | 0.09 |
| Zn⁺⁺ | 0.1 | 0.96 | ± | 0.1 0 | 0.04 | ± | 0.0 1 | 4 | 0.04 |
| | 100 | 0.80 | ± | 0.1 0 | 0.04 | ± | 0.0 1 | 3 | 0.52 |

| **b) SOLSIL 1:10 dilution pH 12.8** | | | | | | | | | |
|---|---|---|---|---|---|---|---|---|---|
| Speci e | Conc (g.L⁻¹) | Specie retention in aqueous phase | | | Specie desorption | | | pH of aqueous phase after mixing | Dry mass of solid phase (g) |
| | | | | | | | | | |
| Cd⁺⁺ | 1 | 0.12 | ± | 0.0 1 | 0.00 | ± | 0.0 0 | 13 | 0.28 |
| | 10 | 0.02 | ± | 0.0 0 | 0.00 | ± | 0.0 0 | 13 | 3.17 |
| Cu⁺⁺ | 0.1 | 0.08 | ± | 0.0 1 | 0.04 | ± | 0.0 1 | 14 | 0.29 |
| | 1 | 0.02 | ± | 0.0 0 | 0.00 | ± | 0.0 0 | 13 | 0.23 |
| | 10 | 0.22 | ± | 0.0 3 | 0.02 | ± | 0.0 0 | 12 | 1.84 |
| Fe⁺⁺ | 1 | 0.08 | ± | 0.0 1 | | | | 13 | 0.21 |
| | 10 | 0.86 | ± | 0.1 1 | | | | 0 | 0.77 |
| | 100 | 0.77 | ± | 0.0 6 | 0.01 | ± | 0.0 0 | 1 | 0.10 |
| Mn⁺⁺ | 0.1 | 0.02 | ± | 0.0 0 | 0.02 | ± | 0.0 0 | 13 | 0.38 |
| Ni⁺⁺ | 1 | 0.43 | ± | 0.0 6 | 0.02 | ± | 0.0 0 | 13 | 0.23 |
| | 10 | 0.38 | ± | 0.0 5 | 0.04 | | 0.0 1 | 6 | 1.33 |
| Pb⁺⁺ | 0.5 | 0.65 | ± | 0.0 7 | 0.00 | ± | 0.0 0 | 13 | 0.00 |
| Zn⁺⁺ | 0.1 | 0.30 | ± | 0.0 3 | 0.16 | ± | 0.0 2 | 13 | 0.04 |
| | 1 | 0.04 | | 0.0 0 | 0.10 | ± | 0.0 2 | 13 | 0.95 |
| | 10 | 0.46 | | 0.0 6 | 0.06 | ± | 0.0 1 | 6 | 1.23 |
| | 100 | 0.78 | ± | 0.0 9 | 0.09 | ± | 0.0 1 | 6 | 2.81 |

In detail, diluted *SOLSIL* showed a varying degree of removal capability for different species. For example for treatment with diluted *SOLSIL* at pH 12.8, 88% or more of Cd, 98% of Mn, 99% of ²⁴¹Am and about 60% of Ni was removed. In other cases, such as ⁶⁰Co and Fe⁺⁺⁺ (100 g.L⁻¹) the removal was much less, 12% and 23% respectively. Overall though, the results clearly demonstrated the potential of developing *SOLSIL* as a medium for application in situation where removal and fixing of particular species from the aqueous to a solid phase is desirable.

We carried out additional experiments to determine *SOLSIL's* effectiveness under conditions different from those used in the main set of experiments. As an example, no visible solid phase was formed with some species investigated under the main experimental conditions - these species include As and Hg. The experiments were repeated with the concentrated *SOLSIL* as provided - but still not solid phase was visible. In further experiments a pH adjustment to about 5 with gradual addition of glacial acetic acid to the mixture was attempted but it did not trigger generation of a solid phase. Considering the low concentrations of Hg and As in pure phases, we added a small amount (5mL) of 10g.L⁻¹ Fe⁺⁺⁺ as a carrier in 1:8 ratio to 0.1g.L⁻¹ hg and As solutions mixed with 1:10 diluted pH 12.8 *SOLSIL.* The solid phase thus generated did partly remove the species and Hg and As concentrations reduced to 0.78 ± 0.12 and 0.47 ± 0.07 of the original value.

In another experiment, *SOLSIL's* capability of removing radioactive ⁶⁰Co was enhanced when stable Co⁺⁺ was added as a carrier (as 5mg of CoCl₂ in 40mL of the sample solution) and *SOLSIL* AS PROVIDED WAS USED TO TRIGGER THE SOLID PHASE FORMATION. Under these treatment conditions, amount remaining in the aqueous phase could be reduced from 0.88 ± 0.09 to 0.33 ± 0.06. Table Three shows results of ⁶⁰Co and some other species where enhancement in *SOLSIL's* capability was observed when the concentrated (as provided) material was used.

**Table Three: Results of treatment of selected species with SOLSIL as supplied. Corresponding values for 1:10 diluted SOLSIL preparation are included for comparison.**

| **Specie** | **Fraction retained in aqueous phase** | | | | | |
|---|---|---|---|---|---|---|
| | ***SOLSIL* as supplied** | | | ***SOLSIL* 1:10 diluted pH 12.8** | | |
| ⁶⁰Co | 0.33 | ± | 0.06 | 0.88 | ± | 0.09 |
| Uranyl nitrate | 0.01 | ± | 0.01 | 0.27 | ± | 0.12 |
| ²²⁶Ra (1000 Bq) | 0.15 | ± | 0.07 | 0.99 | ± | 0.09 |
| ²³²Th (989 Bq) | 0.26 | ± | 0.02 | 0.59 | ± | 0.01 |

One interesting observation was that Mn as MnCl₂ in solution generated a solid phase during *SOLSIL* interaction (and was readily removed) but as KMnO₄, it did not.

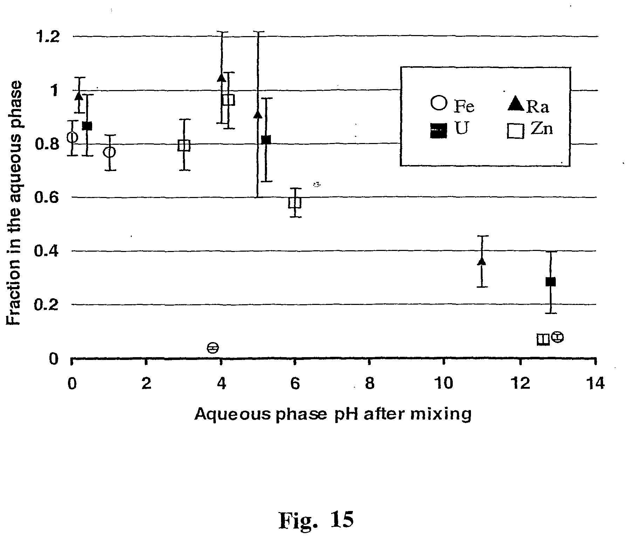

Even for the same specie, variations occurred in the fraction retained in the aqueous phase for different sample concentrations. As mentioned in Section 2, the stock solutions were acidified to ensure solubility. For this reasons, in a number of cases the *SOLSIL* and stock solution interaction occurred at a pH different from the constituents. The final aqueous phase pH was measured and in Figure 15, fraction in the aqueous phase has been plotted against this pH for a number of different species. The results show a general trend of better removal capability when the int4eraction takes place at a higher pH. As an example *SOLSIL's* ability to remove iron from the solution increased from (12 ± 7) % to (92 ± 1) % as the pH changed from near zero to near 13.

### 6. Conclusions

Batch experiments provided an evidence of *SOLSIL's* ability to remove chemical species from solutions to a self generated solid phase. Its potential can be enhanced by working out optimum conditions specific to an application.

Once removed to the solid phase the specie is likely to be retained mainly in the solid phase - some remobilisation may occur, including perhaps a significant contribution from the residues of solutes left with the moisture in the solid at the time of separation. In those application where lesser mobilisation is desirable, the solids may be rewashed prior to their disposal after *SOLSIL* treatment.

The *SOLSIL* appears to be more effective when used at higher pH and at higher concentrations. Also pH during *SOLSIL* - specie interaction may alter its effectiveness.

### APPENDIX ONE

### TABLES OF RESULTS

**TABLE A1: Analytical results for batch experiments with radioactive species**

| **a) SOLSIL 1:10 dilution pH 10.0** | | | | | | | | | |
|---|---|---|---|---|---|---|---|---|---|
| Specie | Cone (g.L⁻¹) | Specie retention in aqueous phase | | | Specie desorption | | | pH of aqueous phase after mixing | Dry mass of solid phase (g) |
| ¹³⁷Cs | 555 | 0.9 4 | ± | 0.0 6 | 0.00 | ± | 0.0 5 | 0 | 0.04 |
| ²¹⁰Pb | 1586 | 0.8 9 | ± | 0.0 9 | 0.03 | ± | 0.0 1 | 5 | 0.00 |
| ²²⁶Ra | 100 | 1.0 5 | ± | 0.1 7 | 0.03 | ± | 0.0 2 | 4 | 0.05 |
| | 1000 | 0.9 8 | ± | 0.0 9 | 0.06 | ± | 0.0 1 | 0 | 0.06 |
| ²²⁸Ra | 99 | 0.4 2 | ± | 0.3 1 | | | | 4 | 1.10 |
| | 989 | 0.9 6 | ± | 0.0 7 | | | | 4 | 0.25 |
| ²²⁸Th | 99 | 0.0 5 | ± | 0.0 7 | | | | 4 | 1.10 |
| | 989 | 0.1 9 | ± | 0.0 2 | | | | 4 | 0.25 |
| ²³²Th | 99 | 0.1 3 | ± | 0.0 2 | 0.05 | ± | 0.0 0 | 4 | 0.63 |
| | 989 | 0.2 1 | ± | 0.0 1 | 0.40 | ± | 0.0 2 | 4 | 0.25 |
| ²³⁸U | 100 | 0.8 6 | ± | 0.1 6 | 0.02 | ± | 0.0 0 | 0 | 0.04 |
| | 1000 | 0.8 1 | ± | 0.1 6 | 0.01 | ± | 0.0 0 | 5 | 0.07 |
| ²⁴¹Am | 456 | 0.8 0 | ± | 0.0 5 | 0.00 | ± | 0.0 0 | 4 | 0.07 |
| ₆₀Co | 610 | 0.9 0 | ± | 0.1 0 | 0.05 | ± | 0.0 2 | 2 | 0.06 |
| ⁹⁰Sr/⁹⁰Y | 610 | 0.9 9 | ± | 0.0 7 | 0.02 | ± | 0.0 0 | 4 | 0.04 |

| **b) SOLSIL 1:10 dilution pH 12.8** | | | | | | | | | |
|---|---|---|---|---|---|---|---|---|---|
| Specie | Conc (g.L⁻¹) | Specie retention in aqueous phase | | | Specie desorption | | | pH of aqueous phase after mixing | Dry mass of solid phase (g) |
| ¹³⁷Cs | 555 | 0.9 0 | ± | 0.0 6 | 0.02 | ± | 0.1 4 | 0 | 0.04 |
| ²¹⁰Pb | 1586 | 0.0 7 | ± | 0.0 2 | 0.10 | ± | 0.0 1 | 13 | 0.00 |
| ²²⁶Ra | 100 | 0.3 6 | ± | 0.0 9 | 0.08 | ± | 0.0 2 | 11 | 0.12 |
| | 1000 | 0.9 9 | ± | 0.0 9 | 0.02 | ± | 0.0 1 | 0 | 0.04 |
| ²²⁸Ra | 99 | 0.3 0 | ± | 0.2 9 | | | | 13 | 0.07 |
| | 989 | 0.7 3 | ± | 0.0 7 | | | | 13 | 0.05 |
| ²²⁸Th | 99 | 0.2 7 | ± | 0.0 7 | | | | 13 | 0.07 |
| | 989 | 0.7 2 | ± | 0.0 2 | | | | 13 | 0.05 |
| ²³²Th | 99 | 0.1 3 | ± | 0.0 2 | 0.02 | ± | 0.0 0 | 13 | 0.08 |
| | 989 | 0.5 9 | ± | 0.0 1 | 0.03 | ± | 0.0 2 | 13 | 0.05 |
| ²³⁸U | 100 | 0.8 8 | ± | 0.1 7 | 0.00 | ± | 0.0 0 | 0 | 0.01 |
| | 1000 | 0.2 8 | ± | 0.1 2 | 0.17 | ± | 0.0 0 | 13 | 0.04 |
| ²⁴¹Am | 456 | 0.0 0 | ± | 0.0 1 | 0.01 | ± | 0.0 0 | 13 | 0.08 |
| ₆₀Co | 610 | 0.8 8 | ± | 0.0 9 | 0.01 | ± | 0.0 2 | 2 | 0.04 |
| ⁹⁰Sr/⁹⁰Y | 610 | 0.5 8 | ± | 0.0 5 | 0.03 | ± | 0.0 0 | 8 | 0.50 |

Note that under the heading "IMPLICATIONS" in attachment 1 the presumption regarding SOLSIL (i.e. trade name of the aqueous biogenic silica obtained by the process of the present invention) being prepared by the hydrolysis of TEOS is incorrect. The SOLSIL mentioned in this attachment is prepared by the process according to the present invention..

Annex B is a university report on certain applications using aqueous biogenic silica. This report confirms that aqueous biogenic silica can be applied to remediate polluted media.

The aqueous biogenic silica obtained according to the present invention can therefore be applied for removal of contaminants (heavy metals, organic, mineral and radioactive) from solution and gas into a solid phase, which can then either be dumped as land fill or processed for reuse. It can also treat contaminated soils, water, sludges and solids to change the soluble or leachable fraction into a non-leachable, insoluble or unreactive state.

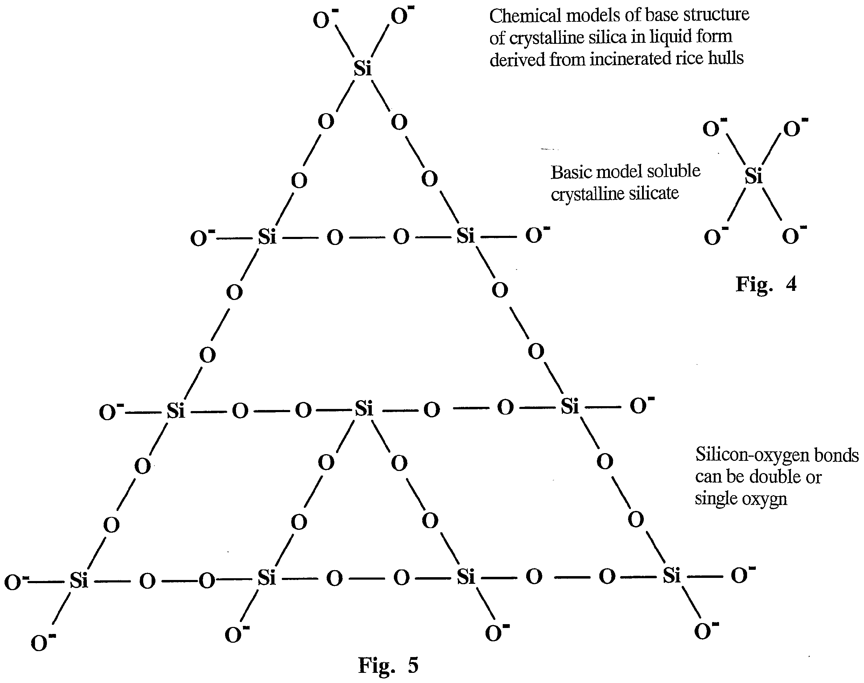

Figure 4 shows a base model of a crystalline silicate. Figure 5 shows a chemical structure of crystalline aqueous biogenic silica according to the present invention. As can be seen, the Figure 5 structure has a large number of free bonding sites. Accordingly, crystalline aqueous biogenic silica is highly reactive.

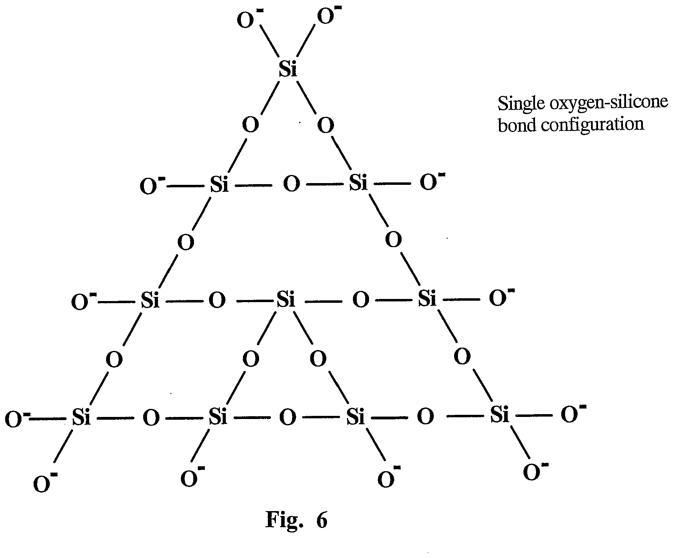

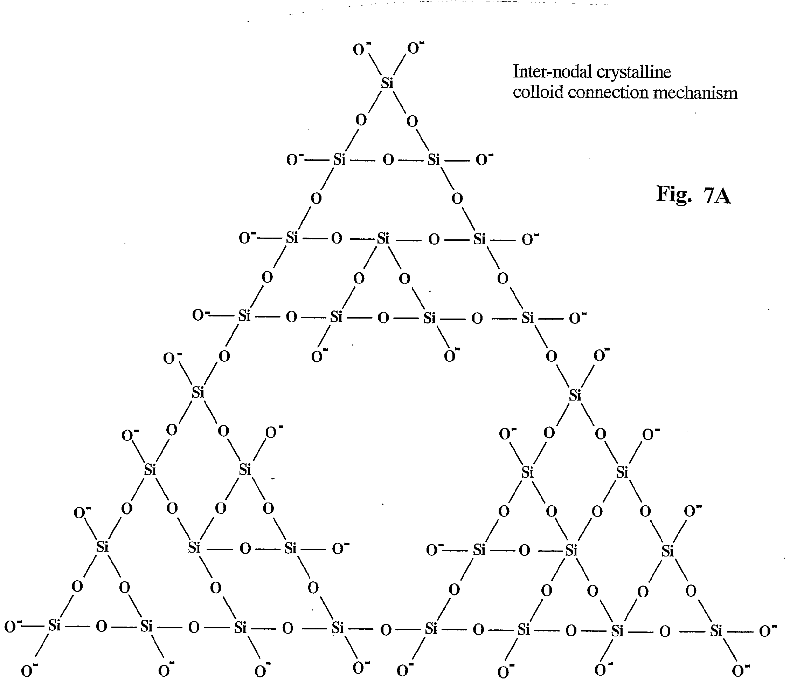

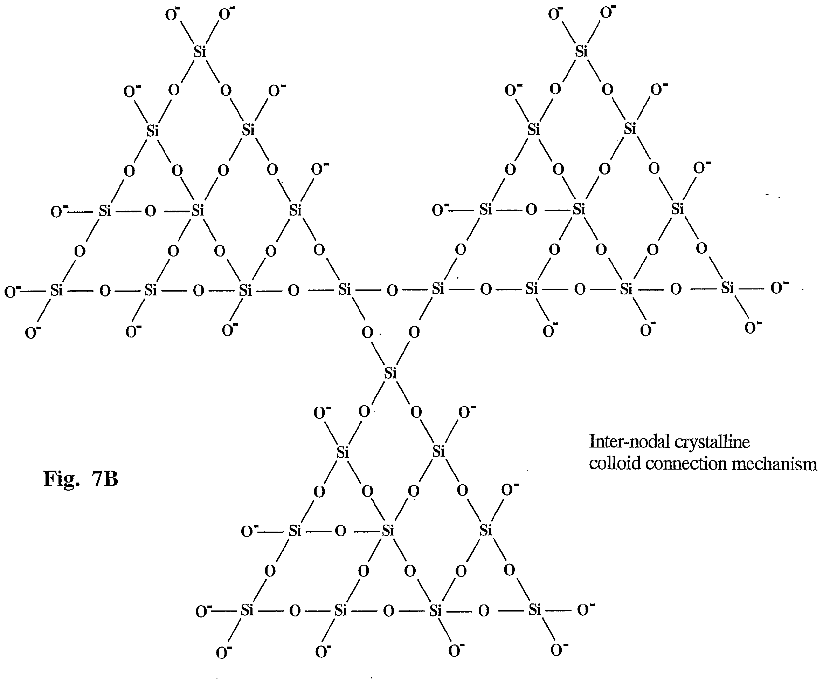

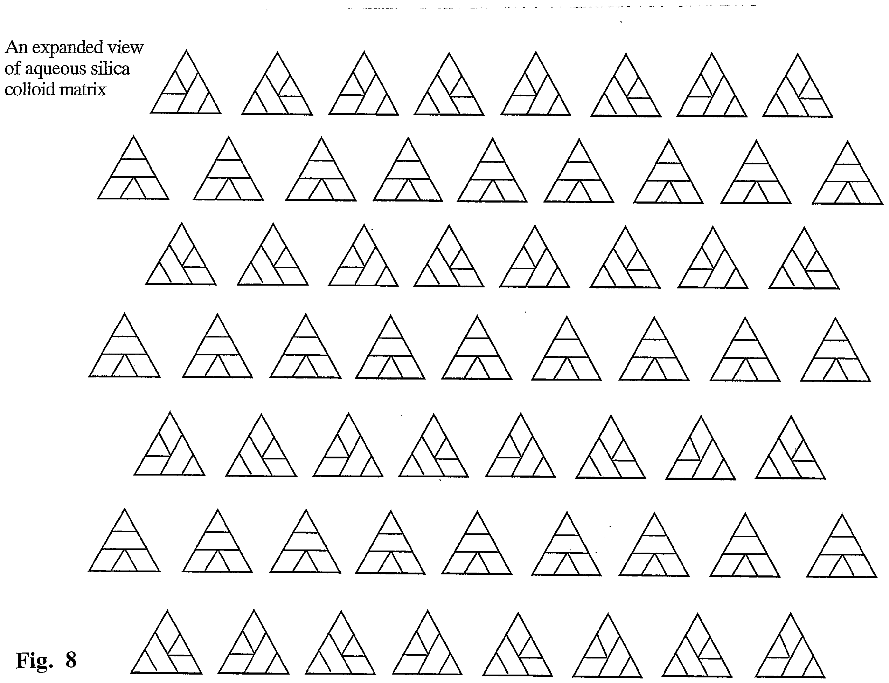

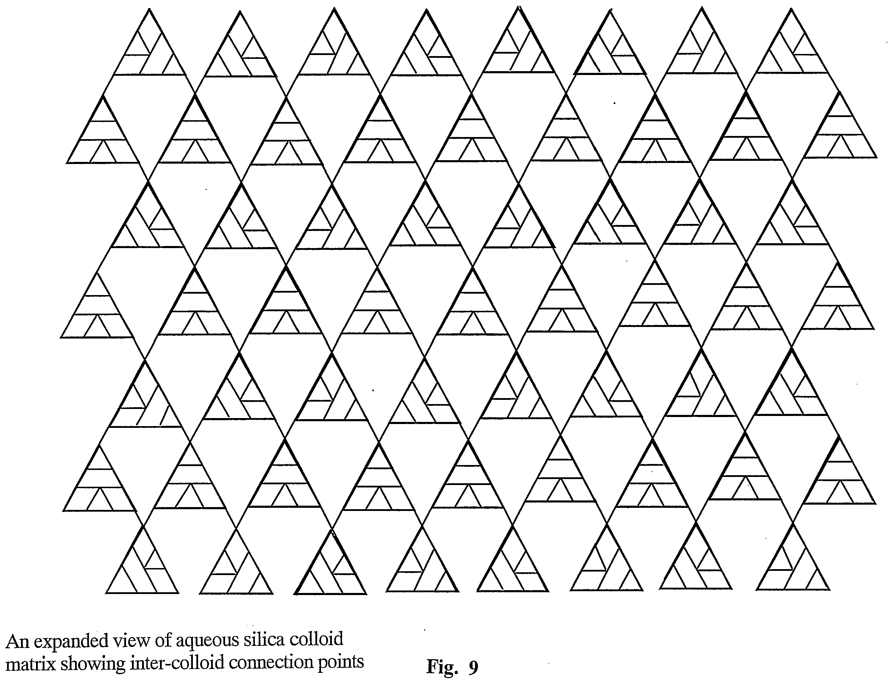

In Figure 6, there is shown a single oxygen silicone bond chemical structure of silicate. In crystalline aqueous biogenic silica, the silica elements are in a colloidal form as shown in Figure 7. In the colloidal form, the crystalline aqueous biogenic silica of the present invention has a large number of reactive sites and inter-nodal sites for accommodating other elements. Figure 8 shows an expanded view of a colloidal matrix of crystalline aqueous biogenic silica. Figure 9 shows an inter-colloid connection points in crystalline aqueous biogenic silica

Examples of some applications are:
- waste management, water treatment for removal of hazardous materials from a leachable, soluble or reactive state in gas, liquid and solid phases by way of chemical bonding to the reactive silica colloid.
- mineral reclamation (mining) eg extracting precious metals, radioactives.
- biological use in fertilisers and medical use to scavenge heavy metals and radioactive substances from human cells.
- remove radioactive elements from solutions and stabilise them in soils so as to prevent environmental contamination
- optical and lining of materials
- cement strength and water/acid resistant
- fire retarding properties. Wood, paper, foam (flammable materials) soaked/injected with soluble silica exhibit excellent fire retarding properties
- termite resistance . The silica, being tougher than termites teeth, deters termites from attacking timber. This is a cost effective alternative to copper, chrome arsenic treatment.
- the crystalline form of aqueous biogenic silica being a very pure form of silicon, is ideal for the electronics/computer industry for electrical conductors. The new era of computers requires ultra pure forms of silica to progress, this form is likely to be the purest ore available at the moment.
- mechanisms for chemical bonding and generation of solid phase from liquid of heavy metals etc

The colloids of aqueous biogenic silica, both amorphous and crystalline can have either a net +ve or -ve charge and exist in an acid or alkaline environment. As similarly charged particles repel due to polarity, this is what keeps the silicone colloids apart and in solution. However, when heavy metals are bonded to these charged bonding sites, the bonding potential is satisfied, overall colloid charge (+ve or -ve) is diminished and the resulting polymers, salts precipitate out into solid phase. The chemical bonding or absorption is strong enough to resist leaching back into solution and therefore solving environmental pollution by way of industrial and mining waste.

All heavy metals, except Cr⁺⁶ radio nuclides and some organics (eg cyanide) are removed from solution and into precipitation by some degree (at least 50%) by the addition of soluble amorphous and crystalline aqueous biogenic silica. Some elements are more difficult to remove solution than others. Eg
- zinc needs a 0.1% w/w addition of soluble crystalline aqueous biogenic silica to remove 98% (and stable) from solution, within a pH range of 1 to 12 from an original concentration of 10ppm. Amorphous removes 82% within the same pH range.
- cadmium needs a 40% w/w addition of crystalline silica to remove 96% from solution in a pH range of 1 to 10 from an original concentration of 2350 ppm. Amorphous aqueous biogenic silica is far less effective on cadmium and nickel than crystalline aqueous biogenic silica.
- arsenic⁺⁵ is removed 100% from solution by a 20% w/w addition of crystalline and amorphous aqueous biogenic silica across all pH range.
- arsenic⁺³ needs 20% Fe⁺² as a co-precipitant and 20% crystalline aqueous biogenic silica to remove 100% As⁺³ from solution between pH 5 to 7 at original As⁺³ concentration of 1340 ppm. Amorphous aqueous biogenic silica under the same conditions removes 99% As⁺³
- Chromium Cr⁺⁶ is unstable by this process
- Chromium Cr⁺³ needs a 100% (1:1) addition of crystalline aqueous biogenic silica to remove 99.7% Cr⁺³ from solution and stable between pH 6 to 7 from original concentration of 10000 ppm, whereas amorphous aqueous biogenic silica removes 99.6% Cr⁺³ from solution between pH of 7 to 12.

Cr⁺⁶ is presently untreatable by industry to satisfy Government environment standards. Cr⁺⁶ can however be converted to Cr⁺³ with addition of reducing agent such as sodium metabisulphite at a rate of 1.5 to 1 Na(Ms) to Cr⁺⁶ . Aqueous biogenic silica can then successfully the Cr⁺⁶ as to Government requirements.
- mercury is removed by 90% from solution by 20% addition of both crystalline silica and amorphous aqueous biogenic silica in an acid environment i.e. pH less than 7
- radio active cobalt Co⁶⁰ requires a co-precipitant of an inert form of cobalt such as cobalt chloride to improve the removal rate from solution from 13% to 78% by adding 10% crystalline aqueous biogenic silica and 10% cobalt chloride.
- Removing salt and minerals from water including sea water.

Clay soil can be stabilised with the silica obtained according to the process of the present invention. The silica forms a crystalline matrix within the clay soil and the treated clay soil has enhanced properties. Addition of between 0.2% to 2% w/w SOLSIL to clay causes the clay to resist water/moisture uptake by way of capillary action. This means the SOLSIL treated clay remains much drier than the untreated clay in the presence of moisture. When SOLSIL treated clay is saturated in water, it has a water holding capacity at least 50% greater than the untreadted clay. When the vessel containing the saturated untreated clay is inverted at least 50% of the water (discoloured) separates from the clay, when the SOLSIL treated clay (saturated as 50% greater capacity than untreated clay) is inverted no water separates from the clay.

When the treated clay (dry) is stood in a vessel of shallow water, the SOLSIL causes the clay to have water resistant properties. When the treated clay (dry) is immersed in water, SOLSIL causes the clay to have improved water retention properties and the treated clay retains form.

When the SOLSIL treated clay is saturated in water it expands more than untreated clay. When this treated and saturatedclay is then dried it does not shrink and crack as the untreated clay does. When the untreated saturated clay is dried, it shrinks and forms small lumps or colloids. When the treated saturated clay is dried it retains an even consistency with no lumps or colloids or cracks.

Crystalline SOLSIL is more effective in clay applications than amorphous SOLSIL. This is likely due to the smaller particle or colloid size of the silica in the crystalline SOLSIL than amorphous, thus penetrating the clay particles more effectively.

As the treated clay is relatively water resistant, SOLSIL can be applied in bacterial inoculation of pastures/soils for agricultural purposes. If a bacterial innoculant is mixed into SOLSIL treated clay, pelletised and dried, then the bacteria becomes dormant and requires significant moisture to "wake-up" or activate. The inoculated SOLSIL clay pellets are spread onto soil/pasture. The water resistant properties of the SOLSIL clay prevent the bacteria from becoming wet from light rain/showers, dew or slight sub-soil moisture, retaining the integrity of the bacteria for the instance of heavy rain, saturated soil moisture, whereby the SOLSIL clay will then absorb enough moisture to activate the dormant bacteria at a time when legume crops require the bacteria to enhance nitrogen fixation on the root nodules.

If the bacterial innoculant had been activated by slight moisture, and then re-dried due to lack of significant rain, the bacteria can then die in field conditions and re-inoculation must occur when heavy rain does eventuate.

The application of SOLSIL clay bacterial inoculation onto soils/pasture in dry conditions for leguminous crops/pastures has many advantages for farmers. It allows farmers to innoculate at dry periods (pre-season) when time is more available to the farmer, for when the opening season rains do happen, there are may other important jobs to do. If very heavy rains do occur, it may be a prolonged time until the farmer can physically get his equipment onto the wet soil, missing the opportunity of vital early inoculation of leguminous crops/pastures.

A SOLSIL/clay scurry can be coated onto seeds and then sown into dry soil (dry seeding) pre-season. It will then take significant rain/soil moisture to germinate the seed and improves the success of dry seeding. If untreated seed is sown dry followed by light rain, the seed germinates. If there is no follow up rain within 2 to 3 weeks, the seedlings can die leading to crop failure or expensive and time consuming re-seeding.

## Claims

1. A process of preparing an aqueous crystalline biogenic silica comprising the steps of:
a) incinerating a silica bearing organic source at a temperature from about 700°C up to about 1200°C to produce crystalline incinerated silica bearing organic source, and allowing the incinerated silica bearing organic source to cool;
b) adding the incinerated and cooled silica bearing organic source to an alkaline solution that has either been preheated to a temperature up to about 65°C or to be heated with the added incinerated and cooled silica bearing organic source to a temperature up to about 65°C, the alkaline solution being contained in a vessel and having a pH from 12 up to 14 the added incinerated and cooled_silica bearing organic source constituting 2 to 22% by weight, and the alkaline solution constituting 3 to 8% by weight of an hydroxide or hydroxides and 70 to 95% by weight of water:
c) applying heat and pressure to the added incinerated and cooled silica bearing organic source and the alkaline solution in the vessel at a temperature between 100°C and up to about 300°C for 1 to 4 hours, to thereby form an aqueous crystalline biogenic silica with a pH from 12 to 14 and undissolved impurities derived from the added organic source; and
d) extracting the formed aqueous crystalline biogenic silica from the vessel,

2. The process according to claim 1 wherein the silica bearing organic source is selected from one or a combination of two or more of group comprising rice hulls, wheat hulls, and herbs with a high level of silica.

3. The process according to claim 2 wherein the herbs include urtica dioca (stinging nettle) and Equisetum (horsetail).

4. The process according to claim 1 wherein the hydroxide are selected from hydroxides of sodium, lithium, potassium, rubidium, cesium and francium.

5. The process according to claim 4 wherein the added incinerated and cooled silica bearing organic source is in a proportion of about 320g of incinerated rice hulls to the alkaline solution of about 160g of an hydroxide or hydroxides and 3 litre of water.

6. The process according to any one of claims 1 to 5 wherein the vessel is pressurised so that the heat is applied at a relatively high pressure therein.

7. The process according to claim 6 wherein the vessel has an open top which is covered by a lockable lid with a pressure release valve arranged for releasing excessive pressure within the vessel.

8. A method of remediating media containing inorganic and/or organic pollutants comprising contacting the media with a matrix generating agent having an aqueous crystalline biogenic silica obtained according to the process as claimed in one of claims 1 to 7, the matrix generating agent being arranged to generate within the media a silicate matrix having a plurality of active reactive sites for bonding to the pollutants.

9. The method according to claim 8 wherein the media is mixed with the matrix generating agent, and heating the resultant mixture at a temperature that is sufficiently high for a sufficient period to produce kerogenic compounds within said mixture.

10. The method according to claim 9 wherein the kerogenic compounds having kerogen-like or kerogenic structures of large organic geo-polymers of no particular order whereby the kerogenic compounds have an irregular structure and comprise both aliphatic and aromatic constituents and are capable of trapping within them smaller organic and Inorganic molecules,

11. The method according to claim 10 wherein the kerogenic compounds are formed by pclycondensation reactions occurring at the reactive sites within the matrix, and the kerogens then become chemically bonded to the matrix and are generally insoluble in both water and most organic solvents.

12. The method according to any one of claims B to 11 wherein the organic pollutants include at least one of P.C.B-s, polyaromatic hydrocarbons, pesticides, herbicides, insecticides, halogenated solvents, furans, volatile hydrocarbons including benzene, toluene, and xylene,

13. The method according to any one of claims 8 to 11 wherein the inorganic pollutants Include any of heavy metals comprising lead, cadmium, mercury, chromium, vanadium, and the like, and/or any of radioactive elements comprising uranium, strontium, thorium and other actinide, and/or any of substances containing radioactive elements comprising radioactive iodine.

14. The method according to any one of claims 8 to 13 wherein the media including any of soils, sediments, sludges, water, air and other similar materials.

15. A construction material or fabric treated with the aqueous crystalline biogenic silica prepared by the process as claimed in any one of claims 1 to 7 for rendering the treated construction material or fabric with a substantially good flame retardation property and/or termite deterrent property.

16. A semi-conductor wafer manufactured with the aqueous crystalline biogenic silica prepared by the process as claimed in any one of claims 1 to 7.

17. A fertiliser for organic plants comprising the aqueous crystalline biogenic silica prepared by the process as claimed in any one of claims 1 to 7.

18. A process of removing a substantial heavy metal and/or reducing a substantial radioactive level from an animal comprising ingesting the aqueous crystalline biogenic silica prepared by the process as claimed in any one of claims 1 to 7.

19. A method of treating clay soil comprising adding to a mass of clay soil an aqueous crystalline biogenic silica prepared by the process as claimed in any one of claims 1 to 7 in a proportion of between 0.2% and 2% weight to weight of the silica to the clay soil.

## Patentansprüche

1. Verfahren zur Herstellung von wässrigem kristallinem biogenem Siliziumdioxid, umfassend die Schritte:
a) Verbrennen einer siliziumdioxidhaltigen biologischen Quelle bei einer Temperatur von etwa 700°C bis etwa 1200°C zur Produktion von Siliziumdioxid, welches dann in einer kristallinen verbrannten siliziumdioxidhaltigen biologischen Quelle vorliegt, und Abkühlenlassen der verbrannten siliziumdioxidhaltigen biologischen Quelle;
b) Hinzufügen der verbrannten und abgekühlten siliziumdioxidhaltigen biologischen Quelle zu einer alkalischen Lösung, welche entweder bis auf eine Temperatur von etwa 65°C vorgewärmt wurde oder mit der hinzugefügten verbrannten und abgekühlten siliziumdioxidhaltigen biologischen Quelle bis auf eine Temperatur von etwa 65°C zu erwärmen ist, wobei die alkalische Lösung in einem Gefäß enthalten ist und einen pH-Wert von 12 bis 14 aufweist, die hinzugefügte verbrannte und abgekühlte siliziumdioxidhaltige biologische Quelle 2 bis 22 Gewichtsprozent ausmacht, ein Hydroxid bzw. Hydroxide der alkalischen Lösung 3 bis 8 Gewichtsprozent ausmachen und Wasser der alkalischen Lösung 70 bis 95 Gewichtsprozent ausmacht;
c) Erwärmen und Unter-Druck-setzen der hinzugefügten verbrannten und abgekühlten siliziumdioxidhaltigen biologischen Quelle und der alkalischen Lösung in dem Gemäß bei einer Temperatur zwischen 100°C und etwa 300°C für 1 bis 4 Stunden, um dadurch wässriges kristallines biogenes Siliziumdioxid mit einem pH-Wert von 12 bis 14 und von der hinzugefügten biologischen Quelle stammende ungelöste Verunreinigungen zu bilden; und
d) Extrahieren des gebildeten wässrigen kristallinen biogenen Siliziumdioxids aus dem Gefäß.

2. Verfahren nach Anspruch 1, wobei die siliziumdioxidhaltige biologische Quelle aus einem oder aus einer Kombination von zwei oder mehr aus einer Gruppe ausgewählt ist, die aus Reishülsen, Weizenhülsen und Kräutern mit hohem Siliziumdioxidgehalt besteht.

3. Verfahren nach Anspruch 2, wobei die Kräuter Urtica dioica (Große Brennnessel) und Equisetum (Schachtelhalm) umfassen.

4. Verfahren nach Anspruch 1, wobei die Hydroxide aus Natrium-, Lithium-, Kalium-, Rubidium-, Cäsium- und Franciumhydroxid ausgewählt sind.

5. Verfahren nach Anspruch 4, wobei die hinzugefügte verbrannte und abgekühlte siliziumdioxidhaltige biologische Quelle in einem Verhältnis von etwa 320 g verbrannter Reishülsen zu der alkalischen Lösung aus etwa 160 g eines Hydroxids oder mehrerer Hydroxide und 3 Liter Wasser vorliegt.

6. Verfahren nach einem der Ansprüche 1 bis 5, wobei das Gefäß unter Druck steht, sodass das Erwärmen darin bei einem verhältnismäßig hohen Druck stattfindet.

7. Verfahren nach Anspruch 6, wobei das Gefäß eine offene Oberseite aufweist, welche von einem verriegelbaren Deckel bedeckt ist der ein Druckablassventil aufweist, das vorgesehen ist zum Ablassen von übermäßigem Druck Innerhalb des Gefäßes.

8. Verfahren zur Sanierung eines Mediums, das anorganische und/oder organische Schadstoffe enthält, umfassend Kontaktieren des Mediums mit einem matrixerzeugenden Mittel, das wässriges kristallines biogenes Siliziumdioxid aufweist, das gemäß dem Verfahren nach einem der Ansprüche 1 bis 7 gewonnen wurde, wobei das matrixerzeugende Mittel dazu vorgesehen ist, in dem Medium eine Silikatmatrix mit mehreren aktiven reaktiven Stellen zum Binden der Schadstoffe zu erzeugen.

9. Verfahren nach Anspruch 8, wobei das Medium mit dem matrixerzeugenden Mittel vermischt wird und die erhaltene Mischung ausreichend lange bei einer ausreichend hohen Temperatur erwärmt wird, um in der Mischung kerogene Verbindungen zu produzieren.

10. Verfahren nach Anspruch 9, wobei die kerogenen Verbindungen kerogenartige oder kerogene Strukturen großer organischer Geopolymere unbestimmter Ordnung aufweisen, wobei die kerogenen Verbindungen eine unregelmäßige Struktur aufweisen und sowohl aliphatische wie auch aromatische Bestandteile aufweisen und in diesen kleinere organische und anorganische Moleküle einfangen können.

11. Verfahren nach Anspruch 10, wobei die kerogenen Verbindungen durch Polykondensationsreaktionen gebildet werden, die an den reaktiven Stellen in der Matrix auftreten, und die Kerogene dann chemisch an die Matrix gebunden sind und im Allgemeinen sowohl in Wasser als auch den meisten organischen Lösungsmitteln unlöslich sind.

12. Verfahren nach einem der Ansprüche 8 bis 11, wobei die organischen Schadstoffe mindestens eines aus PCBs, polyaromatische Kohlenwasserstoffe, Pestizide, Herbizide, insektizide, halogenierte Lösungsmittel, Furane, leicht flüchtige Kohlenwasserstoffe wie Benzol, Toluol und Xylol umfassen.

13. Verfahren nach einem der Ansprüche 8 bis 11, wobei die anorganischen Schadstoffe irgendeines der Schwermetalle Blei, Kadmium, Quecksilber, Chrom, Vanadium und dergleichen und/oder irgendeines der radioaktiven Elemente Uran, Strontium, Thorium oder anderer Aktinoide und/oder irgendeine radioaktive Elemente enthaltende Substanz umfassen, die radioaktives Jod enthält.

14. Verfahren nach einem der Ansprüche 8 bis 13, wobei das Medium irgendeines aus Boden, Sediment, Schlamm, Wasser, Luft oder anderen ähnlichen Materialien aufweist.

15. Baumaterial oder Textilie, welches bzw. welche mit dem wässrigen kristallinen biogenen Siliziumdioxid, das gemäß dem Verfahren nach einem der Ansprüche 1 bis 7 hergestellt wurde, behandelt ist, um dem behandelten Baumaterial bzw. der behandelten Textilie im Wesentlichen gute flammenhemmende Eigenschaften und/oder termitenabweisende Eigenschaften zu verleihen.

16. Halbleiterscheibe, gefertigt mit dem wässrigen kristallinen biogenen Siliziumdioxid, das gemäß dem Verfahren nach einem der Ansprüche 1 bis 7 hergestellt wurde.

17. Dünger für biologische Pflanzen, aufweisend das wässrige kristalline biogene Siliziumdioxid, das gemäß dem Verfahren nach einem der Ansprüche 1 bis 7 hergestellt wurde.

18. Verfahren zur Entfernung eines wesentlichen Schwermetalls aus und/oder zur Verringerung eines wesentlichen Radioaktivitätsniveaus in einem Tier, umfassend Einnehmen des wässrigen kristallinen biogenen Siliziumdioxids, das gemäß dem Verfahren nach einem der Ansprüche 1 bis 7 hergestellt wurde.

19. Verfahren zur Behandlung von Tonboden, umfassend Hinzufügen von wässrigem kristallinem biogenem Siliziumdioxid, das gemäß dem Verfahren nach einem der Ansprüche 1 bis 7 hergestellt wurde, zu einer Menge Tonboden in einem Verhältnis von zwischen 0,2 und 2 Gewichtsprozent bezogen auf das Gewicht des Siliziumdioxids des Tonbodens.

## Revendications

1. Un procédé de préparation d'une silice biogène cristalline aqueuse, qui se compose des étapes suivantes :
a) Combustion d'une source organique siliceuse à une température comprise entre environ 700 °C et 1 200 °C pour produire de la silice dans une source organique siliceuse consumée cristalline, et permettant à la source organique siliceuse cristalline de se
refroidir ;
b) Ajout de la source organique siliceuse consumée et refroidie à une solution alcaline qui a été préchauffée à une température d'environ 65 °C ou bien qui sera portée à une température d'environ 65 °C une fois la source organique siliceuse consumée et refroidie ajoutée, la solution alcaline étant contenue dans une cuve et présentant un pH compris entre 12 et 14, la source organique siliceuse consumée et refroidie ajoutée représentant de 2 à 22 % en poids, et la solution alcaline 3 a 8 % d'un ou plusieurs hydroxydes en poids et 70 à 95 % d'eau en poids :
c) Chauffage et application de pression à la source organique siliceuse consumée et refroidie ajoutée et à la solution alcaline dans la cuve, à une température comprise entre 100 °C et 300 °C environ au maximum pendant 1 à 4 heures, pour ainsi former une silice biogène cristalline aqueuse avec un pH compris entre 12 à 14 et des impuretés non dissoutes provenant de la source organique ajoutée ; et
d) Extraction de la silice biogène cristalline aqueuse de la cuve.

2. Le procédé conformément à la revendication 1, dans lequel la source organique siliceuse est sélectionnée parmi l'un des groupes suivants, ou une combinaison d'au moins deux de ces groupes : balles de riz, enveloppes de grain de blé et herbes avec une teneur élevée en silice.

3. Le procédé conformément à la revendication 2, dans lequel les herbes peuvent être, entre autres, de l'urtica dioica (ortie piquante) et de l'equisetum (prêle).

4. Le procédé conformément à la revendication 1, dans lequel les hydroxydes sont sélectionnés parmi les hydroxydes suivants : hydroxydes de sodium, de lithium, de potassium, de rubidium, de césium et de francium.

5. Le procédé conformément à la revendication 4, dans lequel la source organique siliceuse consumée et refroidie ajoutée se trouve dans une proportion d'environ 320 g de balles de riz consumées pour une solution alcaline constituée d'environ 160 g d'un ou plusieurs hydroxydes et de 3 litres d'eau.

6. Le procédé conformément à l'une des revendications 1 à 5, dans lequel la cuve est pressurisée afin que la chaleur soit appliquée à une pression interne relativement élevée.

7. Le procédé conformément à la revendication 6, dans lequel la cuve est dotée d'une ouverture supérieure fermée par un couvercle verrouillable équipé d'une soupape de détente pour libérer la pression excessive contenue dans la cuve.

8. Une méthode d'assainissement du milieu contenant des polluants organiques et/ou inorganiques, qui consiste à mettre en contact le milieu avec un agent de création de matrice contenant une silice biogène cristalline aqueuse obtenue conformément à l'une des revendications 1 à 7, l'agent de création de matrice étant tel qu'il génère dans le milieu une matrice de silicate composée de plusieurs sites réactifs actifs pour permettre la liaison des polluants.

9. La méthode conformément à la revendication 8, dans laquelle le milieu est mélangé à l'agent de création de matrice, et le mélange résultant est chauffé à une température suffisamment élevée pendant une durée suffisamment longue pour permettre la production de composés kérogènes dans ledit mélange.

10. La méthode conformément à la revendication 9, dans laquelle les composés kérogènes présentent des structures kérogènes ou similaires de larges géopolymères organiques sans ordre particulier ; les composés kérogènes présentent une structure irrégulière, se composent d'éléments aliphatiques et aromatiques, et sont capables de piéger des molécules organiques et inorganiques plus petites.

11. La méthode conformément à la revendication 10, dans laquelle les composés kérogènes sont formés par polycondensation sur les sites réactifs dans la matrice, les kérogènes se liant ensuite chimiquement à la matrice et étant généralement insolubles dans l'eau et la plupart des solvants organiques.

12. La méthode conformément à l'une des revendications 8 à 11, dans laquelle les polluants organiques incluent au moins l'un des polluants suivants : PCB, hydrocarbures polyaromatiques, pesticides, herbicides, insecticides, solvants halogénés, furannes, et hydrocarbures volatiles, y compris le benzène, le toluène et le xytène.

13. La méthode conformément à l'une des revendications 8 à 11, dans laquelle les polluants inorganiques sont des métaux lourds (y compris le plomb, le cadmium, le mercure, le chrome, le vanadium et métaux lourds similaires), et/ou des éléments radioactifs quelconques (y compris l'uranium, le strontium, le thorium ou autre actinide), et/ou des substances quelconques contenant des éléments radioactifs (y compris l'iode
radioactif).

14. La méthode conformément à l'une des revendications 8 à 13, dans laquelle le milieu est de la terre, des sédiments, des boues, de l'eau, de l'air ou d'autres milieux
similaires.

15. Un tissu ou un matériau de construction traité avec la silice biogène cristalline aqueuse préparée selon l'une des revendications 1 à 7 afin que le tissu ou le matériau de construction traité présente des propriétés d'ignifugation et/ou anti-termite suffisamment efficaces.

16. Une galette de semi-conducteurs fabriquée avec la silice biogène cristalline aqueuse préparée par le procédé décrit dans l'une des revendications 1 à 7.

17. Un engrais pour plantes organiques contenant de la silice biogène cristalline aqueuse préparée par le procédé décrit dans l'une des revendications 1 à 7.

18. Un procédé d'élimination d'un niveau substantiel de métaux lourds et/ou de réduction d'un niveau substantiel de radioactivité dans un animal, via l'ingestion de la silice biogène cristalline aqueuse préparée par le procédé décrit dans l'une des revendications 1 à 7.

19. Une méthode de traitement des sols argileux consistant à ajouter à une masse de sol argileux de la silice biogène cristalline aqueuse préparée par le procédé décrit dans l'une des revendications 1 à 7, dans des proportions de 0,2 % à 2 % en poids de silice par poids de sol argileux.
